(19)

Europäisches
Patentamt

European
Patent Office

Office européen
des brevets

(11) **EP 4 538 958 A1**

(12) **EUROPEAN PATENT APPLICATION**
published in accordance with Art. 153(4) EPC

(43) Date of publication:
**16.04.2025 Bulletin 2025/16**

(21) Application number: **23878710.5**

(22) Date of filing: **30.06.2023**

(51) International Patent Classification (IPC):
**G06T 1/20** (2006.01)

(52) Cooperative Patent Classification (CPC):
**G06T 1/20; G06T 1/60; G06T 15/00**

(86) International application number:
**PCT/CN2023/104575**

(87) International publication number:
**WO 2024/082713 (25.04.2024 Gazette 2024/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.10.2022 CN 202211288925**

(71) Applicant: **Huawei Technologies Co., Ltd.
Shenzhen, Guangdong 518129 (CN)**

(72) Inventors:
• **FENG, Shaobo
Shenzhen, Guangdong 518129 (CN)**
• **LIU, Chang
Shenzhen, Guangdong 518129 (CN)**
• **WANG, Shu
Shenzhen, Guangdong 518129 (CN)**
• **ZHENG, Tianji
Shenzhen, Guangdong 518129 (CN)**

(74) Representative: **Maiwald GmbH
Engineering
Elisenhof
Elisenstrasse 3
80335 München (DE)**

(54) **IMAGE RENDERING METHOD AND APPARATUS**

(57)     This application discloses an image rendering method, including: rendering a first data frame at a first resolution to obtain a first image frame, where the first data frame is a 1st data frame of an application scene of an application that is running on an electronic device; rendering a plurality of second data frames at a second resolution to obtain a plurality of second image frames, where the second resolution is less than the first resolution, and the plurality of second data frames are subsequent data frames of the application scene; and compensating for rendering data of each of the plurality of second image frames by using the first image frame as a reference frame. According to the solution provided in this application, only the 1st data frame is rendered at the high resolution, and other data frames of the application scene are rendered at the low resolution. Then, rendering data of each second image frame is compensated for by using the first image frame as the reference frame. In this way, a high-quality image can be provided by using relatively low computing power during image rendering.

FIG. 4

EP 4 538 958 A1

## Description

This application claims priority to Chinese Patent Application No. 202211288925.1, filed with the China National Intellectual Property Administration on October 20, 2022 and entitled "IMAGE RENDERING METHOD AND APPARATUS", which is incorporated herein by reference in its entirety.

## TECHNICAL FIELD

This application relates to the field of computer technologies, and specifically, to an image rendering method and apparatus.

## BACKGROUND

Computer graphics is a science that uses mathematical algorithms to convert two-dimensional or three-dimensional graphics into a raster form for computer displays. Rendering is important research content in computer graphics.

Due to limitations of hardware devices such as central processing units (central processing units, CPUs) and graphics processing units (graphics processing units, GPUs), it is usually difficult for mobile terminals to achieve same rendering realism and performance as personal computers (personal computers, PCs). For example, in terms of game scenes, mobile games face greater challenges in rendering effects and performance compared to PC games.

As users increasingly depend on the mobile terminals, high-frame-rate and high-image-quality rendering on the mobile terminals has become a future trend. This poses a great challenge to performance of the mobile terminals.

## SUMMARY

This application provides an image rendering method, to provide a high-quality image by using relatively low computing power. This application further provides a corresponding apparatus, an electronic device, a computer-readable storage medium, a computer program product, and the like.

A first aspect of this application provides an image rendering method, including: rendering a first data frame at a first resolution to obtain a first image frame, where the first data frame is a 1st data frame of an application scene of an application that is running on an electronic device; rendering a plurality of second data frames at a second resolution to obtain a plurality of second image frames, where the second resolution is less than the first resolution, the plurality of second data frames are data frames of the application scene that follow the first data frame in time sequence, and the plurality of second data frames are in a one-to-one correspondence with the plurality of second image frames; and compensating for rendering data of each of the plurality of second image frames by using the first image frame as a reference frame.

In this application, the first resolution may be understood as a high resolution, the second resolution may be understood as a low resolution, and the second resolution is usually half of the first resolution.

In this application, both the first data frame and the second data frame may be rendering instructions.

In this application, the application that is running on the electronic device may be a game application, or may be another type of application that needs real-time rendering. The application usually includes a plurality of application scenes.

According to the solution provided in this application, in data frames of a first scene, only a 1st data frame is rendered at the high resolution, and other data frames of the application scene are rendered at the low resolution, so that rendering loads are reduced. Then, rendering data of each second image frame is compensated for by using the first image frame as the reference frame, thereby compensating for high-frequency information in the second image frames obtained through rendering at the low resolution. This improves image quality of the second image frames. In this way, a high-quality image can be provided by using relatively low computing power during image rendering in this application.

In a possible implementation, the electronic device includes a first buffer and a second buffer, a size of the first buffer corresponds to the first resolution, and a size of the second buffer corresponds to the second resolution; the first buffer is configured to buffer the reference frame, and the second buffer is configured to buffer any one of the plurality of second image frames; and the foregoing step of compensating for rendering data of each of the plurality of second image frames by using the first image frame as a reference frame includes: compensating for rendering data of the any one second image frame in the second buffer based on rendering data of the reference frame in the first buffer.

In this application, because the first resolution is different from the second resolution, a size of the first image frame obtained through rendering at the first resolution is different from a size of the second image frame obtained through rendering at the second resolution. For example, the first image frame obtained through rendering at the first resolution is 8M, and the second image frame obtained through rendering at the second resolution is 4M. Therefore, the first resolution and the second resolution need to be combined to configure the first buffer and the second buffer, so that the size of the configured first buffer can meet a requirement for storing the first image frame, and the size of the configured second buffer can meet a requirement for storing the second image frame. The size of the first buffer is a storage capacity of the first buffer, for example, 8M. The size of the second buffer is a storage capacity of the second buffer, for example, 4M. Certainly, this is merely an example, and specific values of the first buffer and the second buffer are not limited.

In this possible implementation, because the size of the first image frame obtained through rendering at the first resolution is different from the size of the second image frame obtained through rendering at the second resolution, two sets of buffers that correspond to the first resolution and the second resolution respectively are configured. In this way, images of different resolutions can be well buffered, and there is no need to configure an excessively large buffer. As a result, a waste of storage resources is reduced.

In a possible implementation, before the foregoing step of rendering a first data frame at a first resolution to obtain a first image frame, the method further includes: obtaining scene indication information corresponding to the first data frame, where the scene indication information is used to determine whether a change in application scene occurs; and if it is determined, based on the scene indication information, that the change in application scene occurs, determining to render the first data frame at the first resolution.

In this application, the scene indication information is information that can indicate whether a change in scene occurs. The scene indication information may include information about a virtual camera, a scene identifier, a model (model, M) matrix, a view (view, V) matrix, a projection (projection, P) matrix, rendering channel information, a rendering instruction, or the like. The information about the virtual camera may be a position or an angle of the virtual camera. If the virtual camera is changed, a switch in scene occurs. If the same virtual camera rotates and an angle at which the virtual camera rotates is very small, it may be understood as that a change in scene does not occur. If the same virtual camera rotates and the angle at which the virtual camera rotates exceeds a threshold, it may be understood as that a change in scene occurs. The scene identifier may be information indicating that a switch in scene occurs. The scene identifier may be information transmitted by an upper layer, for example, in a game scene, a character opens a door, or a character changes direction while moving. If the M matrix, the V matrix, or the P matrix is changed, it may also indicate that a change in scene occurs. Certainly, the scene indication information is not limited to the several types of information listed herein, and all other information that can indicate that the change in scene occurs falls within the scope of the scene indication information in this application.

In this possible implementation, whether the change in application scene occurs is determined based on the scene indication information, and the 1st data frame of the application scene is rendered at the high resolution only when the change in application scene occurs. In this way, high-frequency information of the application scene can be retained, and rendering loads can be reduced.

In a possible implementation, before the foregoing step of rendering a plurality of second data frames at a second resolution to obtain a plurality of second image frames, the method further includes: for the any one second data frame, obtaining scene indication information corresponding to the any one second data frame, where the scene indication information is used to determine whether a change in application scene occurs; and if it is determined, based on the scene indication information, that the change in application scene does not occur, determining to render the any one second data frame at the second resolution.

In this possible implementation, when the change in application scene does not occur, all the second data frames following the 1st data frame are rendered at the low resolution. In this way, rendering loads are effectively reduced.

In a possible implementation, the foregoing step of compensating for rendering data of each of the plurality of second image frames by using the first image frame as a reference frame includes: upsampling the any one second image frame in the second buffer to obtain an upsampled first temporary image; reprojecting the reference frame in the first buffer relative to the any one second image frame to obtain a first reprojected image; and compensating, by using rendering data of a pixel in the first reprojected image, for rendering data of a pixel at a corresponding position in the first temporary image.

In this application, both upsampling and downsampling are operations on an image in a buffer. Upsampling is scaling up an image, and downsampling is scaling down an image. Reprojection is reusing rendering data of a reference frame for a new viewing position and direction, that is, reusing the reference frame for a position of the any one second image frame.

In this possible implementation, a corresponding pixel in an image obtained through rendering at the low resolution is compensated for by using reprojection and by using the reference frame, thereby well compensating for missing high-frequency information in the second image frames obtained through rendering at the low resolution. This improves the image quality of the second image frames.

In a possible implementation, the foregoing step of compensating, by using rendering data of a pixel in the first reprojected image, for rendering data of a pixel at a corresponding position in the first temporary image includes: determining a similarity between a first pixel block and a second pixel block, where the first pixel block is a pixel block of N*M pixels in the first reprojected image, the second pixel block is a pixel block of N*M pixels in the first temporary image, a position of the first pixel block in the first reprojected image corresponds to a position of the second pixel block in the first temporary image, and at least one of N and M is an integer greater than 1; and if the similarity is greater than a first threshold, replacing, with rendering data of a valid pixel in the first pixel block, rendering data of a pixel that is in the second pixel block and whose position corresponds to a position of the valid pixel, where the valid pixel is a pixel for which an absolute value of a difference between a first depth value and a second depth value is less than the first threshold, the first depth value is a depth value of a pixel in the first reprojected image, and the second depth value is a depth value of a pixel in the first temporary image.

In this application, the first reprojected image may be buffered in a first reprojection buffer, and the first temporary image may be buffered in a first temporary buffer.

In this possible implementation, before compensation, the first reprojected image and the first temporary image are divided into blocks, and then similarity comparison is performed to determine whether the second pixel block needs compensation. Image structures and more macro information on the images can be retained through division into blocks. This helps reuse the reference frame as much as possible, to improve the image quality of the frames obtained through rendering at the low resolution. In addition, whether the second pixel block needs compensation is determined based on a similarity comparison result, so that compensation can be avoided for a pixel block that does not need compensation. In this way, compensation efficiency is improved. In addition, depth data is fully considered during compensation. Therefore, the rendering solution of this application is applicable to various frame rates.

In a possible implementation, the foregoing step of reprojecting the reference frame in the first buffer relative to the any one second image frame to obtain a first reprojected image includes: determining, based on coordinates of each pixel in the reference frame, a first product, and a second product, coordinates of each corresponding pixel obtained by reprojecting the reference frame relative to the any one second image frame, where the first product is a product of a view matrix and a projection matrix of the reference frame, and the second product is a product of a view matrix and a projection matrix of the any one second image frame; and obtaining the first reprojected image based on a comparison result between a depth value of each pixel obtained through reprojection and a depth value of a corresponding pixel in the first temporary image.

In this possible implementation, reprojection is completed based on pixels, so that accuracy of reprojection can be improved.

In a possible implementation, the foregoing step of obtaining the first reproj ected image based on a comparison result between a depth value of each pixel obtained through reprojection and a depth value of a corresponding pixel in the first temporary image includes: obtaining an absolute value of a difference between a second depth value of each pixel in the first temporary image and a depth value of a corresponding pixel obtained through reprojection; and if the absolute value of the difference is less than a second threshold, identifying the pixel obtained through reprojection as a valid pixel, to obtain the first reprojected image.

In this possible implementation, a valid pixel that needs compensation is identified during reprojection, so that image quality compensation efficiency can be improved.

In a possible implementation, the foregoing step of compensating for rendering data of each of the plurality of second image frames by using the first image frame as a reference frame includes: determining a residual image of the reference frame in the first buffer; determining a second reprojected image of the residual image; and compensating for rendering data of the any one second image frame in the second buffer based on the second reprojected image.

In this possible implementation, image quality compensation is performed, by using a residual in combination with reprojection, for the second image frame obtained through rendering at the low resolution, so that image quality compensation efficiency can be improved.

In a possible implementation, the foregoing step of determining a residual image of the reference frame in the first buffer includes: downsampling the reference frame in the first buffer to the second resolution and then performing upsampling, to obtain a second temporary image; and determining the residual image of the reference frame based on the reference frame in the first buffer and the second temporary image.

In a possible implementation, the foregoing step of determining a second reprojected image of the residual image includes: determining, based on coordinates of each pixel in the residual image, a first product, and a second product, coordinates of each corresponding pixel obtained by reprojecting the residual image to a time point at which the any one second image frame is generated, to obtain the second reprojected image, where the first product is a product of a view matrix and a projection matrix of the reference frame, and the second product is a product of a view matrix and a projection matrix of the any one second image frame.

In this application, the residual image may be buffered in a residual buffer.

In a possible implementation, the method further includes: intercepting the first data frame and the second data frame, scheduling the first data frame to the first buffer, and scheduling the second data frame to the second buffer.

In this possible implementation, the rendering solution of this application can be combined with various existing application scenes through rendering instruction interception, and there is no need to make a lot of modifications to the existing scenes to use the rendering solution of this application. As a result, compatibility with an existing application that needs real-time rendering is effectively implemented.

A second aspect of this application provides an image rendering apparatus, including:

a first rendering unit, configured to render a first data frame at a first resolution to obtain a first image frame, where the first data frame is a 1st data frame of a first scene of an application that is running on an electronic device;

a second rendering unit, configured to render a plurality of second data frames at a second resolution to obtain a plurality of second image frames, where the second resolution is less than the first resolution, the plurality of second data frames are data frames of the first scene that follow the first data frame in time sequence, and the plurality of second data frames are in a one-to-one correspondence with the plurality of second image frames; and

a compensation unit, configured to compensate for rendering data of each of the plurality of second image frames obtained through rendering by the second rendering unit, by using the first image frame obtained through rendering by the first rendering unit as a reference frame.

In a possible implementation, the electronic device includes a first buffer and a second buffer, a size of the first buffer corresponds to the first resolution, and a size of the second buffer corresponds to the second resolution; and the first buffer is configured to buffer the reference frame, and the second buffer is configured to buffer any one of the plurality of second image frames.

The compensation unit is specifically configured to compensate for rendering data of the any one second image frame in the second buffer based on rendering data of the reference frame in the first buffer.

In a possible implementation, the apparatus further includes:

a first obtaining unit, configured to obtain scene indication information corresponding to the first data frame, where the scene indication information is used to determine whether a change in application scene occurs; and

a first determining unit, configured to: if it is determined, based on the scene indication information, that the change in application scene occurs, determine to render the first data frame at the first resolution.

In a possible implementation, the apparatus further includes:

a second obtaining unit, configured to: for the any one second data frame, obtain scene indication information corresponding to the any one second data frame, where the scene indication information is used to determine whether a change in application scene occurs; and

a second determining unit, configured to: if it is determined, based on the scene indication information, that the change in application scene does not occur, determine to render the any one second data frame at the second resolution.

In a possible implementation, the compensation unit is specifically configured to: upsample the any one second image frame in the second buffer to obtain an upsampled first temporary image; reproject the reference frame in the first buffer relative to the any one second image frame to obtain a first reprojected image; and compensate, by using rendering data of a pixel in the first reprojected image, for rendering data of a pixel at a corresponding position in the first temporary image.

In a possible implementation, the compensation unit is specifically configured to: determine a similarity between a first pixel block and a second pixel block, where the first pixel block is a pixel block of N*M pixels in the first reprojected image, the second pixel block is a pixel block of N*M pixels in the first temporary image, a position of the first pixel block in the first reprojected image corresponds to a position of the second pixel block in the first temporary image, and at least one of N and M is an integer greater than 1; and if the similarity is greater than a first threshold, replace, with rendering data of a valid pixel in the first pixel block, rendering data of a pixel that is in the second pixel block and whose position corresponds to a position of the valid pixel, where the valid pixel is a pixel for which an absolute value of a difference between a first depth value and a second depth value is less than the first threshold, the first depth value is a depth value of a pixel in the first reprojected image, and the second depth value is a depth value of a pixel in the first temporary image.

In a possible implementation, the compensation unit is specifically configured to: determine, based on coordinates of each pixel in the reference frame, a first product, and a second product, coordinates of each corresponding pixel obtained by reprojecting the reference frame relative to the any one second image frame, where the first product is a product of a view matrix and a projection matrix of the reference frame, and the second product is a product of a view matrix and a projection matrix of the any one second image frame; and obtain the first reprojected image based on a comparison result between a depth value of each pixel obtained through reprojection and a depth value of a corresponding pixel in the first temporary image.

In a possible implementation, the compensation unit is specifically configured to: obtain an absolute value of a difference between a second depth value of each pixel in the first temporary image and a depth value of a corresponding pixel obtained through reprojection; and if the absolute value of the difference is less than a second threshold, identify the pixel obtained through reprojection as a valid pixel, to obtain the first reprojected image.

In a possible implementation, the compensation unit is specifically configured to: determine a residual image of the reference frame in the first buffer; determine a second reprojected image of the residual image; and compensate for rendering data of the any one second image frame in the second buffer based on the second reprojected image.

In a possible implementation, the compensation unit is specifically configured to: downsample the reference frame in the first buffer to the second resolution and then perform upsampling, to obtain a second temporary image; and determine the residual image of the reference frame based on the reference frame in the first buffer and the second temporary image.

In a possible implementation, the compensation unit is specifically configured to determine, based on coordinates of each pixel in the residual image, a first product, and a second product, coordinates of each pixel obtained by reprojecting the residual image relative to the any one second image frame, to obtain the second reprojected image, where the first product is a product of a view matrix and a projection matrix of the reference frame, and the second product is a product of a view matrix and a projection matrix of the any one second image frame.

A third aspect of this application provides an image rendering apparatus, where the image rendering apparatus has a function of implementing the image processing method according to the first aspect. The function may be implemented by hardware, or may be implemented by hardware executing corresponding software. The hardware or the software includes one or more modules corresponding to the function.

A fourth aspect of this application provides an electronic device, including a transceiver, a processor, and a memory, where the transceiver and the processor are coupled to the memory, the memory is configured to store a program or instructions, and when the program or the instructions are executed by the processor, the electronic device is enabled to perform the method according to any one of the first aspect or the possible implementations of the first aspect.

In this application, the processor may include at least one of a central processing unit (central processing unit, CPU) and a graphics processing unit (graphics processing unit, GPU). Both the CPU and the GPU can perform the image rendering process described in any one of the first aspect or the possible implementations of the first aspect, or the CPU and the GPU work with each other to perform the image rendering process described in any one of the first aspect or the possible implementations of the first aspect.

A fifth aspect of this application provides a chip system, where the chip system includes one or more interface circuits and one or more processors; the interface circuit and the processor are interconnected through a line; the interface circuit is configured to: receive a signal from a memory of an electronic device, and send the signal to the processor, where the signal includes computer instructions stored in the memory; when the processor executes the computer instructions, the electronic device performs the method according to any one of the first aspect or the possible implementations of the first aspect; and the processor is at least one of a CPU and a GPU.

A sixth aspect of this application provides a computer-readable storage medium. The computer-readable storage medium stores instructions. When the instructions are run on an electronic device, the electronic device is enabled to perform the method according to any one of the first aspect or the possible implementations of the first aspect.

A seventh aspect of this application provides a computer program product. The computer program product includes computer program code. When the computer program code is run on a computer, the computer is enabled to perform the method according to any one of the first aspect or the possible implementations of the first aspect.

For related features and effects of the second aspect to the seventh aspect of this application, refer to corresponding descriptions in any one of the first aspect or the possible implementations of the first aspect for understanding.

## BRIEF DESCRIPTION OF DRAWINGS

FIG. 1 is a diagram of a structure of an electronic device according to this application;

FIG. 2 is a diagram of a structure of a terminal according to this application;

FIG. 3 is a diagram of an embodiment of an image rendering method according to this application;

FIG. 4 is a diagram of another embodiment of an image rendering method according to this application;

FIG. 5 is a diagram of a structure of a mobile terminal according to this application;

FIG. 6 is a diagram of another embodiment of an image rendering method according to this application;

FIG. 7 is a diagram of an example of an image quality compensation scenario according to this application;

FIG. 8 is a diagram of another embodiment of an image rendering method according to this application;

FIG. 9 is a diagram of another embodiment of an image rendering method according to this application;

FIG. 10 is a diagram of an embodiment of an image rendering method for a game scene according to this application;

FIG. 11A shows an example of an image generated through rendering at a high resolution;

FIG. 11B shows an example of an image generated through rendering at a low resolution;

FIG. 11C shows an image obtained by performing image quality compensation on FIG. 11B by using FIG. 11A as a reference;

FIG. 12 is a diagram of a structure of an image rendering apparatus according to an embodiment of this application; and

FIG. 13 is a diagram of another structure of an image rendering apparatus according to an embodiment of this application.

## DESCRIPTION OF EMBODIMENTS

The following describes embodiments of this application with reference to the accompanying drawings. It is clear that the described embodiments are merely some rather than all of embodiments of this application. A person of ordinary skill in the art may learn that with development of technologies and emergence of new scenarios, the technical solutions provided in embodiments of this application are also applicable to similar technical problems.

In the specification, claims, and accompanying drawings of this application, the terms "first", "second", and the like are intended to distinguish between similar objects but do not necessarily indicate a specific order or sequence. It should be understood that the data termed in such a way are interchangeable in proper circumstances, so that embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

An embodiment of this application provides an image rendering method, to provide a high-quality image by using relatively low computing power. This application further provides a corresponding apparatus, an electronic device, a computer-readable storage medium, a computer program product, and the like. Details are separately described in the following.

To better understand solutions in embodiments of this application, the following first describes terms and concepts that are related to the field of images and that may be used in embodiments of this application.

(1) Rendering: a process of converting a 3D/2D model into a display image in an electronic device with a display function, widely applied in the fields of games, movie special effects, and the like. In a broad sense, a rendering procedure includes modeling, material creation, animation creation, and rendering and display.

(2) Upsampling: scaling up an image to display the image on a display device with a higher resolution. There are three common methods for upsampling: interpolation (bilinear), transposed convolution (Transposed Convolution), and unpooling (Unpooling). Image upscaling mainly uses the interpolation method. To be specific, a new element is inserted between original image pixels by using an appropriate interpolation algorithm.

(3) Downsampling: scaling down an image to ensure that a size of the image matches a size of a display area.

(4) Reference frame: a frame used as a comparison reference for a subsequent frame.

(5) Reprojection: reusing rendering information of a previous frame for a new viewing position and direction, that is, using temporal coherence to distribute rendering costs across frames.

(6) VP: a product of a view matrix (View Matrix) and a projection matrix (Projection Matrix).

(7) Structural similarity index measure (structural similarity index, SSIM): a method used for measuring a similarity between images.

The image rendering method provided in this application may be applied to various rendering scenarios, for example, a wide range of fields such as movie production, video games, commercial advertisements, smart home, and augmented reality (augmented reality, AR) and virtual reality (virtual reality, VR).

The image rendering method provided in this application may be applied to various electronic devices. The electronic device includes a central processing unit (central processing unit, CPU), a graphics processing unit (graphics processing unit, GPU), and the like, which can render an image. Certainly, the electronic device may further include another device, for example, a network processor (neural-network processing unit, NPU) or an application-specific integrated circuit (application-specific integrated circuit, ASIC). This is merely an example for description, and details are not described herein. For example, the electronic device may be a server or a terminal. For example, the terminal may be a mobile phone (mobile phone), a tablet computer, a notebook computer, a PC, a mobile internet device (mobile internet device, MID), a wearable device, a virtual reality (virtual reality, VR) device, an augmented reality (augmented reality, AR) device, a wireless electronic device in industrial control (industrial control), a wireless electronic device in self driving (self driving), a wireless electronic device in remote medical surgery (remote medical surgery), a wireless electronic device in smart grid (smart grid), a wireless electronic device in transportation safety (transportation safety), a wireless electronic device in smart city (smart city), a wireless electronic device in smart home (smart home), or the like. The electronic device may be a device that runs an Android system, an iOS system, a Windows system, or another system. An application whose application scene needs to be rendered to obtain a two-dimensional image, such as a game application, a lock screen application, a map application, or a surveillance application, may run on the electronic device.

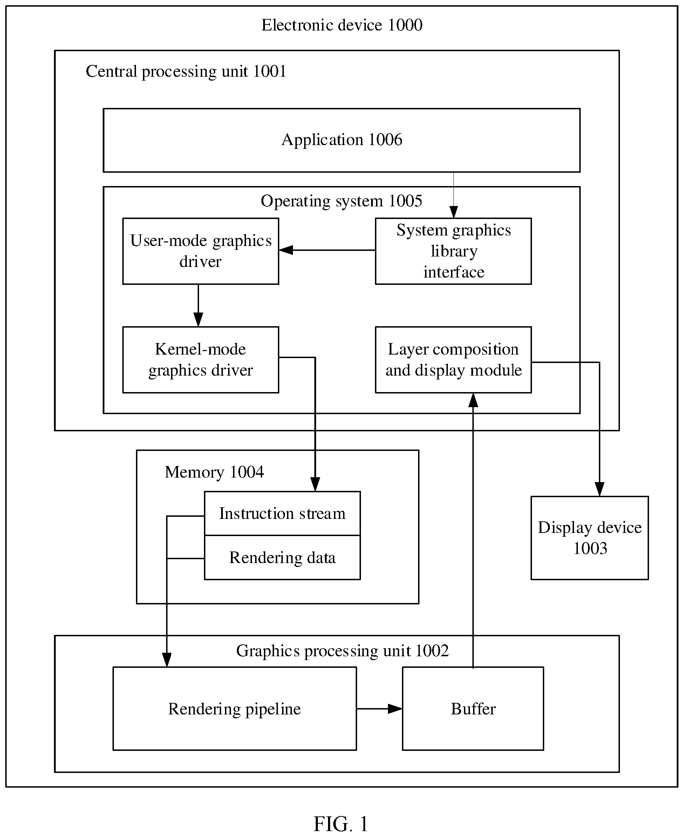

For ease of understanding, the following describes a specific structure of the electronic device in detail with reference to FIG. 1. FIG. 1 is a diagram of a structure of an electronic device according to an embodiment of this application.

In a possible embodiment, as shown in FIG. 1, an electronic device 1000 may include a central processing unit 1001, a graphics processing unit 1002, a display device 1003, and a memory 1004. Optionally, the electronic device 1000 may further include at least one communication bus (not shown in FIG. 1) for implementing connection and communication between components.

It should be understood that the components in the electronic device 1000 may alternatively be coupled to each other through another connector, and the another connector may include various interfaces, transmission lines, buses, or the like. The components in the electronic device 1000 may alternatively be connected in a radial manner with the central processing unit 1001 as a center. In embodiments of this application, coupling refers to mutual electrical connection or communication, including direct connection or indirect connection via another device.

In addition, connection between the central processing unit 1001 and the graphics processing unit 1002 may be implemented in a plurality of manners, which is not limited to the manner shown in FIG. 1. The central processing unit 1001 and the graphics processing unit 1002 in the electronic device 1000 may be on a same chip, or may be respectively on independent chips.

The following briefly describes functions of the central processing unit 1001, the graphics processing unit 1002, the display device 1003, and the memory 1004.

The central processing unit 1001 is configured to run an operating system 1005 and an application 1006. The application 1006 may be a graphics-based application, such as a game or a video player. The operating system 1005 provides a system graphics library interface. The application 1006 generates both an instruction stream for rendering a graphic or an image frame and required related rendering data through the system graphics library interface and a driver program provided by the operating system 1005, such as a user-mode graphics driver and/or a kernel-mode graphics driver. The system graphics library includes, but is not limited to, a system graphics library such as the open graphics library for embedded systems (open graphics library for embedded systems, OpenGL ES), the Khronos platform graphics interface (the khronos platform graphics interface), or Vulkan (a cross-platform graphics application programming interface). The instruction stream includes a series of instructions, and these instructions are usually instructions for calling the system graphics library interface.

Optionally, the central processing unit 1001 may include at least one of the following types of processors: an application processor, one or more microprocessors, a digital signal processor (digital signal processor, DSP), a microcontroller unit (microcontroller unit, MCU), an artificial intelligence processor, or the like.

The central processing unit 1001 may further include a necessary hardware accelerator, for example, an application-specific integrated circuit (application-specific integrated circuit, ASIC), a field programmable gate array (field programmable gate array, FPGA), or an integrated circuit for implementing a logical operation. The processor 1001 may be coupled to one or more data buses for transmitting data and an instruction between the components in the electronic device 1000.

The graphics processing unit 1002 is configured to: receive a graphics instruction stream sent by the processor 1001, generate a rendering target through a rendering pipeline (pipeline), and display the rendering target on the display device 1003 through a layer composition and display module in the operating system. The rendering pipeline may also be referred to as a rendering pipeline, a pixel pipeline, or a graphics pipeline, and is a parallel processing unit, for processing a graphics signal, in the graphics processing unit 1002. The graphics processing unit 1002 may include a plurality of rendering pipelines, and the plurality of rendering pipelines may independently process graphics signals in parallel. For example, the rendering pipeline may perform a series of operations in a process of rendering a graphic or an image frame. Typical operations may include vertex processing (Vertex Processing), primitive processing (Primitive Processing), rasterization (Rasterization), fragment processing (Fragment Processing), and the like.

Optionally, the graphics processing unit 1002 may include a general-purpose graphics processing unit that executes software, such as a GPU, another type of dedicated graphics processing unit, or the like.

The display device 1003 is configured to display various images generated by the electronic device 1000. The image may be a graphical user interface (graphical user interface, GUI) of the operating system or image data (including still image data and video data) processed by the graphics processing unit 1002.

Optionally, the display device 1003 may include any suitable type of display screen, such as a liquid crystal display (liquid crystal display, LCD), a plasma display, or an organic light-emitting diode (organic light-emitting diode, OLED) display.

The memory 1004 is a transmission channel between the central processing unit 1001 and the graphics processing unit 1002, and may be a double data rate synchronous dynamic random access memory (double data rate synchronous dynamic random access memory, DDR SDRAM) or another type of cache.

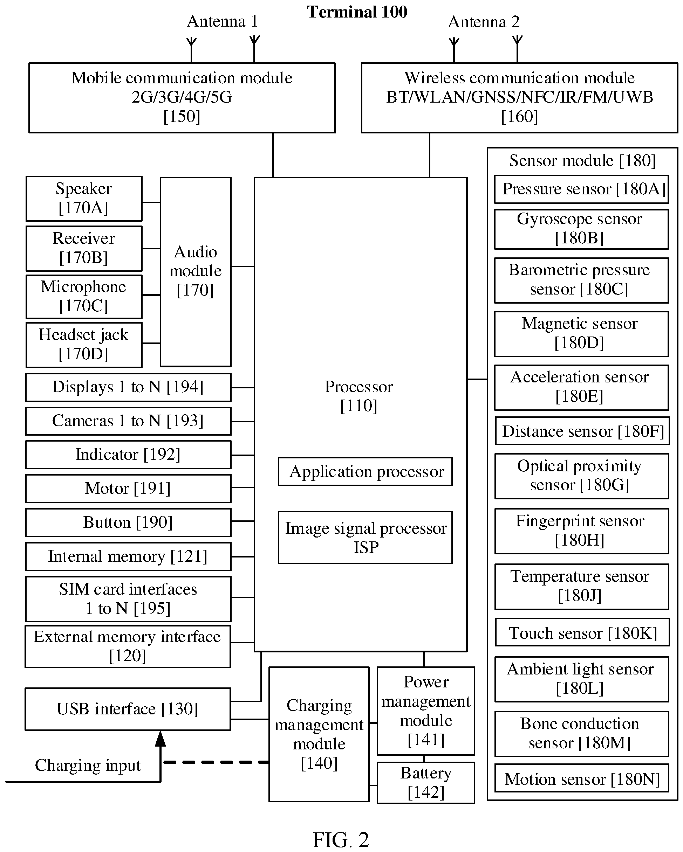

The foregoing describes the structure of the electronic device provided in this application. With reference to FIG. 2, the following describes, from a hardware perspective, a structure of a terminal provided in this application by using one type of terminal as an example.

The terminal 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, a motion sensor 180N, and the like.

It may be understood that an illustrated structure in this embodiment of the present invention does not constitute a specific limitation on the terminal 100. In some other embodiments of this application, the terminal 100 may include more or fewer components than those shown in the figure, or some components may be combined, or some components may be split, or there may be a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store an instruction or data that has been used or cyclically used by the processor 110. If the processor 110 needs to use the instruction or the data again, the processor 110 may directly invoke the instruction or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the terminal 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and encode an analog signal. In some embodiments, the audio module 170 may be coupled to the wireless communication module 160 through the PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts data to be transmitted between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI may be configured to connect the processor 110 to a peripheral component such as the display 194 or the camera 193. The MIPI includes a camera serial interface (camera serial interface, CSI), a display serial interface (display serial interface, DSI), and the like. In some embodiments, the processor 110 communicates with the camera 193 through the CSI, to implement an image shooting function of the terminal 100. The processor 110 communicates with the display 194 through the DSI, to implement a display function of the terminal 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI, or the like.

The USB interface 130 is an interface that conforms to a USB standard specification, and may be specifically a mini USB interface, a micro USB interface, a USB Type-C interface, or the like. The USB interface 130 may be configured to connect to a charger to charge the terminal 100, or may be configured to transmit data between the terminal 100 and a peripheral device, or may be configured to connect to a headset, to play audio through the headset. The interface may alternatively be configured to connect to another electronic device such as an AR device. It should be understood that, the USB interface 130 may also be replaced with another interface, for example, an interface that may implement charging or data transmission, such as a Type-C interface or a lighting interface. Herein, only the USB interface 130 is used as an example for description.

It may be understood that an interface connection relationship between the modules illustrated in embodiments of the present invention is merely an example for description, and does not constitute a limitation on the structure of the terminal 100. In some other embodiments of this application, the terminal 100 may alternatively use an interface connection manner different from that in the foregoing embodiment, or may use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the terminal 100. The charging management module 140 supplies power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the terminal 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the terminal 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the terminal 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to modulate a to-be-sent low-frequency baseband signal into a medium-high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same component as the mobile communication module 150 or another functional module.

The wireless communication module 160 may provide a wireless communication solution that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, ultra wideband (ultra wideband, UWB), an infrared (infrared, IR) technology, or the like and that is applied to the terminal 100. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert a signal into an electromagnetic wave for radiation through the antenna 2.

In some embodiments, the antenna 1 in the terminal 100 is coupled to the mobile communication module 150, and the antenna 2 in the terminal 100 is coupled to the wireless communication module 160, so that the terminal 100 can communicate with a network and another device by using a wireless communication technology. The wireless communication technology may include but is not limited to a 5th-generation (5th-Generation, 5G) mobile communication technology system, global system for mobile communications (global system for mobile communications, GSM), general packet radio service (general packet radio service, GPRS), code division multiple access (code division multiple access, CDMA), wideband code division multiple access (wideband code division multiple access, WCDMA), time division-code division multiple access (time division-code division multiple access, TD-SCDMA), long term evolution (long term evolution, LTE), Bluetooth (Bluetooth), a global navigation satellite system (the global navigation satellite system, GNSS), wireless fidelity (wireless fidelity, Wi-Fi), near field communication (near field communication, NFC), FM (which may also be referred to as frequency modulation), Zigbee (Zigbee), a radio frequency identification (radio frequency identification, RFID) technology, an infrared (infrared, IR) technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

In some implementations, the terminal 100 may also include a wired communication module (not shown in FIG. 1), or the mobile communication module 150 or the wireless communication module 160 may be replaced with a wired communication module (not shown in FIG. 1). The wired communication module may enable the electronic device to communicate with another device through a wired network. The wired network may include but is not limited to one or more of the following: an optical transport network (optical transport network, OTN), a synchronous digital hierarchy (synchronous digital hierarchy, SDH), a passive optical network (passive optical network, PON), an Ethernet (Ethernet), a flexible Ethernet (flex Ethernet, FlexE), or the like.

The terminal 100 may implement a display function through the GPU, the display 194, the application processor, and the like. The GPU is a microprocessor for interface display, and is connected to the display 194 and the application processor. The GPU is configured to: perform mathematical and geometric computation for graphics rendering. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the terminal 100 may include one or N displays 194, where N is a positive integer greater than 1.

The terminal 100 may implement an image shooting function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a shooting scene. In some embodiments, the ISP may be disposed in the camera 193.

The camera 193 is configured to capture a still image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the terminal 100 may include one or N cameras 193, where N is a positive integer greater than 1.

The digital signal processor is configured to process a digital signal, and may process another digital signal in addition to the digital image signal. For example, when the terminal 100 performs frequency selection, the digital signal processor is configured to perform Fourier transformation on frequency energy.

The video codec is configured to compress or decompress a digital video. The terminal 100 may support one or more video codecs. In this way, the terminal 100 can play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, and quickly processes input information by referring to a structure of a biological neural network, for example, a transfer mode between human brain neurons, and may further continuously perform self-learning. The NPU may be used to implement applications such as intelligent cognition of the terminal 100, for example, image recognition, facial recognition, speech recognition, and text understanding.

The external memory interface 120 may be configured to connect to an external memory card, for example, a micro-SD card, to extend a storage capability of the terminal 100. The external memory card communicates with the processor 110 through the external memory interface 120, to implement a data storage function, for example, store files such as music and videos in the external storage card.

The internal memory 121 may be configured to store computer-executable program code. The executable program code includes instructions. The internal memory 121 may include a program storage area and a data storage area. The program storage area may store an operating system, an application required by at least one function (for example, a sound playing function or an image playing function), and the like. The data storage area may store data (for example, audio data or an address book) and the like created during use of the terminal 100. In addition, the internal memory 121 may include a high-speed random access memory, or may include a nonvolatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications and data processing of the terminal 100.

The terminal 100 may implement an audio function, for example, music playing or recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The terminal 100 may be used to listen to music or answer a call in a hands-free mode over the speaker 170A.

The receiver 170B, also referred to as an "earpiece", is configured to convert an audio electrical signal into a sound signal. When a call is answered or speech information is received through the terminal 100, the receiver 170B may be put close to a human ear to listen to a speech.

The microphone 170C, also referred to as a "mike" or a "mic", is configured to convert a sound signal into an electrical signal. When making a call or sending speech information, a user may make a sound near the microphone 170C through the mouth of the user, to input a sound signal to the microphone 170C. At least one microphone 170C may be disposed in the terminal 100. In some other embodiments, two microphones 170C may be disposed in the terminal 100, to capture a sound signal and implement a noise reduction function. In some other embodiments, three, four, or more microphones 170C may alternatively be disposed in the terminal 100, to capture a sound signal, implement noise reduction, identify a sound source, and implement a directional recording function and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The terminal 100 determines pressure intensity based on the change of the capacitance. When a touch operation is performed on the display 194, the terminal 100 detects an intensity of the touch operation through the pressure sensor 180A. The terminal 100 may also calculate a touch position based on a detection signal of the pressure sensor 180A. In some embodiments, touch operations performed at a same touch position but with different touch operation intensities may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to the first pressure threshold is performed on the SMS message application icon, an instruction for creating a new SMS message is executed.

The gyroscope sensor 180B may be configured to determine a motion posture of the terminal 100. In some embodiments, angular velocities of the terminal 100 around three axes (namely, x, y, and z axes) may be determined through the gyroscope sensor 180B. The gyroscope sensor 180B may be configured to implement image stabilization during image shooting. For example, when a shutter is pressed, the gyroscope sensor 180B detects an angle at which the terminal 100 shakes, calculates, based on the angle, a distance for which a lens module needs to compensate, and allows the lens to cancel the shake of the terminal 100 through reverse motion, to implement image stabilization. The gyroscope sensor 180B may also be used in a navigation scenario and a somatic game scenario.

The barometric pressure sensor 180C is configured to measure barometric pressure. In some embodiments, the terminal 100 calculates an altitude based on a barometric pressure value measured by the barometric pressure sensor 180C, to assist in positioning and navigation.

The magnetic sensor 180D includes a Hall sensor. The terminal 100 may detect opening and closing of a flip cover or a leather case by using the magnetic sensor 180D. In some embodiments, when the terminal 100 is a flip phone, the terminal 100 may detect opening and closing of the flip cover through the magnetic sensor 180D. Further, a feature such as flip-to-unlock is set based on a detected open or closed state of the leather case or a detected open or closed state of the flip cover.

The acceleration sensor 180E may detect values of accelerations of the terminal 100 in various directions (usually on the three axes), and may detect a magnitude and a direction of gravity when the terminal 100 is still. The acceleration sensor 180E may be further configured to identify a posture of the electronic device, and is used in an application such as a pedometer or switching between a landscape mode and a portrait mode.

The distance sensor 180F is configured to measure a distance. The terminal 100 may measure the distance through infrared light or laser. In some embodiments, in a shooting scene, the terminal 100 may measure a distance by using the distance sensor 180F, to implement quick focusing.

The optical proximity sensor 180G may include, for example, a light-emitting diode (LED) and an optical detector such as a photodiode. The light-emitting diode may be an infrared light-emitting diode. The terminal 100 emits infrared light through the light-emitting diode. The terminal 100 detects infrared reflected light from a nearby object by using the photodiode. When sufficient reflected light is detected, the terminal 100 may determine that there is an object near the terminal 100. When insufficient reflected light is detected, the terminal 100 may determine that there is no object near the terminal 100. The terminal 100 may detect, by using the optical proximity sensor 180G, that the user holds the terminal 100 close to an ear for a call, to automatically turn off a screen for power saving. The optical proximity sensor 180G may also be used in a leather case mode or a pocket mode to automatically unlock or lock the screen.

The ambient light sensor 180L is configured to sense ambient light brightness. The terminal 100 may adaptively adjust brightness of the display 194 based on the sensed ambient light brightness. The ambient light sensor 180L may also be configured to automatically adjust white balance during photographing. The ambient light sensor 180L may also work with the optical proximity sensor 180G to detect whether the terminal 100 is in a pocket, to avoid an accidental touch.

The fingerprint sensor 180H is configured to collect a fingerprint. The terminal 100 may implement fingerprint-based unlocking, application lock access, fingerprint-based photographing, fingerprint-based call answering, and the like.

The temperature sensor 180J is configured to detect a temperature. In some embodiments, the terminal 100 executes a temperature processing policy based on the temperature detected by the temperature sensor 180J. For example, when the temperature reported by the temperature sensor 180J exceeds a threshold, the terminal 100 lowers performance of a processor near the temperature sensor 180J, to reduce power consumption and implement thermal protection. In some other embodiments, when the temperature is lower than another threshold, the terminal 100 heats the battery 142 to avoid abnormal shutdown of the terminal 100 due to a low temperature. In some other embodiments, when the temperature is lower than still another threshold, the terminal 100 boosts an output voltage of the battery 142 to avoid abnormal shutdown caused by a low temperature.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may alternatively be disposed on a surface of the terminal 100 at a position different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure pulse signal. In some embodiments, the bone conduction sensor 180M may also be disposed in the headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure pulse signal obtained by the bone conduction sensor 180M, to implement a heart rate detection function.

The motion sensor 180N may be configured to: detect a moving object within a shooting range of a camera, and capture a movement contour, a movement trajectory, or the like of the moving object. For example, the motion sensor 180N may be an infrared sensor, a laser sensor, or a dynamic vision sensor (dynamic vision sensor, DVS). The DVS may specifically include a sensor, such as a DAVIS (Dynamic and Active-pixel Vision Sensor), an ATIS (Asynchronous Time-based Image Sensor), or a CeleX sensor. The DVS draws on a characteristic of biological vision. Each pixel simulates one neuron and independently responds to a relative change in light intensity (referred to as "light intensity" below). When the relative change in the light intensity exceeds a threshold, a pixel outputs an event signal, where the event signal includes a position of the pixel, a time stamp, and feature information of the light intensity.

The button 190 includes a power button, a volume button, and the like. The button 190 may be a mechanical button, or may be a touch button. The terminal 100 may receive a button input, and generate a button signal input related to a user setting and function control of the terminal 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. For the motor 191, touch operations performed on different areas of the display 194 may also correspond to different vibration feedback effects. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or pulled out of the SIM card interface 195, so that the SIM card is in contact with or separated from the terminal 100. The terminal 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195. The plurality of cards may be of a same type or different types. The SIM card interface 195 is compatible with different types of SIM cards. The SIM card interface 195 is also compatible with an external storage card. The terminal 100 interacts with a network through the SIM card, to implement functions such as calling and data communication. In some embodiments, the terminal 100 uses an eSIM, namely, an embedded SIM card. The eSIM card may be embedded in the terminal 100, and cannot be separated from the terminal 100.

It should be noted that, in some actual application scenarios, the electronic device may include more or fewer components than those shown in FIG. 1, which may be specifically adjusted based on an actual application scenario. This is not limited in this application.

With reference to the foregoing electronic device, the following describes the image rendering method provided in this application.

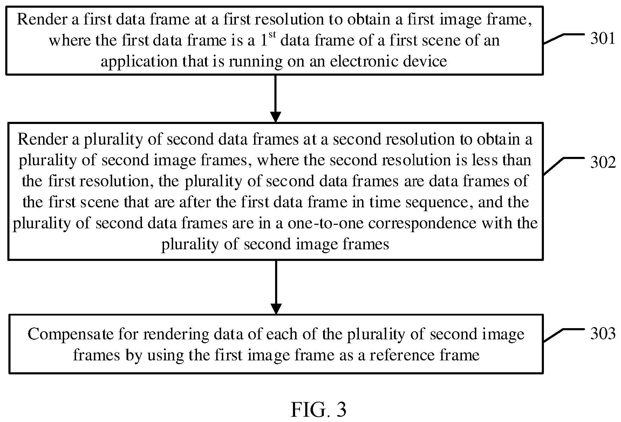

FIG. 3 is a flowchart of an image rendering method according to this application, as described below.

301: Render a first data frame at a first resolution to obtain a first image frame, where the first data frame is a 1st data frame of an application scene of an application that is running on an electronic device.

In embodiments of this application, the application that is running on the electronic device may be a game application, or may be another type of application that needs real-time rendering. The application usually includes a plurality of application scenes.

302: Render a plurality of second data frames at a second resolution to obtain a plurality of second image frames, where the second resolution is less than the first resolution, the plurality of second data frames are data frames of the application scene that follow the first data frame in time sequence, and the plurality of second data frames are in a one-to-one correspondence with the plurality of second image frames.

In embodiments of this application, the first resolution may be understood as a high resolution, the second resolution may be understood as a low resolution, and the second resolution is usually half of the first resolution. Certainly, the second resolution may alternatively be three quarters or another proportion of the first resolution. This is not limited in this application, provided that the second resolution is less than the first resolution.

In embodiments of this application, both the first data frame and the second data frame may be rendering instructions. A game is used as an example. The rendering instruction may be an instruction for skybox rendering, an instruction for main scene rendering, an instruction for post-processing scene rendering, or an instruction for other scene rendering. The first data frame and the second data frame are instructions for main scene rendering in many cases.

303: Compensate for rendering data of each of the plurality of second image frames by using the first image frame as a reference frame.

In embodiments of this application, in data frames of a first scene, only a 1st data frame is rendered at the high resolution, and other data frames of the application scene are rendered at the low resolution, so that rendering loads are reduced. Then, rendering data of each second image frame is compensated for by using the first image frame as the reference frame, thereby compensating for high-frequency information in the second image frames obtained through rendering at the low resolution. This improves image quality of the second image frames. In this way, a high-quality image can be provided by using relatively low computing power during image rendering in this application.

Optionally, in embodiments of this application, the electronic device includes a first buffer and a second buffer, a size of the first buffer corresponds to the first resolution, and a size of the second buffer corresponds to the second resolution. The first buffer is configured to buffer the reference frame, and the second buffer is configured to buffer any one of the plurality of second image frames.

Because the first resolution is different from the second resolution, a size of the first image frame obtained through rendering at the first resolution is different from a size of the second image frame obtained through rendering at the second resolution. For example, the first image frame obtained through rendering at the first resolution is 8M, and the second image frame obtained through rendering at the second resolution is 4M. Therefore, the first resolution and the second resolution need to be combined to configure the first buffer and the second buffer, so that the size of the configured first buffer can meet a requirement for storing the first image frame, and the size of the configured second buffer can meet a requirement for storing the second image frame. The size of the first buffer is a storage capacity of the first buffer, for example, 8M. The size of the second buffer is a storage capacity of the second buffer, for example, 4M. Certainly, this is merely an example, and specific values of the first buffer and the second buffer are not limited.

In other words, before rendering, the electronic device allocates two sets of buffers for rendering. One set of buffers whose sizes correspond to the first resolution is referred to as the first buffer, and one set of buffers whose sizes correspond to the second resolution is referred to as the second buffer. Certainly, more sets of buffers may alternatively be allocated. A quantity of buffers is not limited in this application. The first buffer is configured to buffer the reference frame, namely, the first image frame, and the second buffer is configured to buffer the any one second image frame. In an image rendering process, frames are rendered one by one, and a next frame is rendered after one frame is output. Therefore, the second buffer usually buffers only one second image frame.

It should be noted that, both the first buffer and the second buffer may include one or more buffers. For example, the first buffer may include a color buffer, a depth buffer, and certainly another buffer such as a stencil buffer. Similarly, the second buffer may also include a color buffer, a depth buffer, or another buffer. This is not limited in this application. The color buffer is configured to buffer color data (a color value of each pixel), and the depth buffer is configured to buffer depth data (a depth value of each pixel).

In embodiments of this application, regardless of whether any one data frame is the first data frame or the second data frame, before rendering of the any one data frame, whether a change in application scene occurs is determined based on scene indication information corresponding to the any one data frame, to determine whether to perform rendering at the first resolution or the second resolution. If rendering is performed at the first resolution, a first image frame obtained through rendering is buffered in the first buffer. If rendering is performed at the second resolution, a second image frame obtained through rendering is buffered in the second buffer, and then rendering data of the second image frame in the second buffer is compensated for based on a reference frame in the first buffer, to obtain a compensated image frame that can be output.

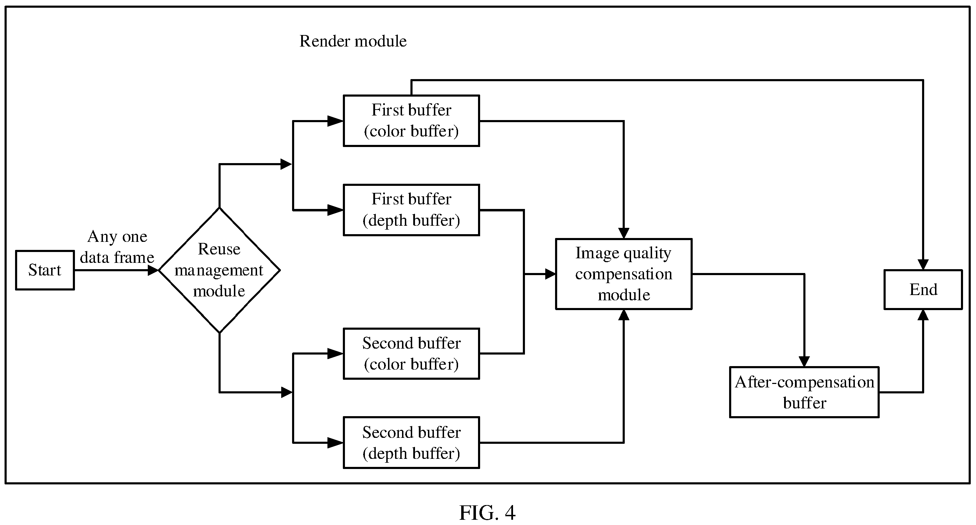

The foregoing process may be understood with reference to an image rendering process shown in FIG. 4.

As shown in FIG. 4, rendering performed by a render module (render module, RM) on any one data frame, from start to end, may include the following process:

When there is any one data frame to render, a reuse management module (reuse management module, RMM) first determines, based on scene indication information of the any one data frame, whether a change in application scene occurs. If the reuse management module determines, based on the scene indication information, that the change in application scene occurs, the any one data frame is rendered at a first resolution, color data of a first image frame obtained through rendering is buffered in a color buffer corresponding to the first resolution, and depth data of the first image frame is buffered in a depth buffer corresponding to the first resolution. If the reuse management module determines, based on the scene indication information, that the change in application scene does not occur, the any one data frame is rendered at a second resolution, color data of a second image frame obtained through rendering is buffered in a color buffer corresponding to the second resolution, and depth data of the second image frame is buffered in a depth buffer corresponding to the second resolution.

The scene indication information is information that can indicate whether a change in scene occurs. The scene indication information may include information that can indicate a change in scene occurs, such as information about a virtual camera, a scene identifier, a model (model, M) matrix, a view (view, V) matrix, a projection (projection, P) matrix, rendering channel information, a rendering instruction, or the like. The information about the virtual camera may be a position or an angle of the virtual camera. If the virtual camera is changed, a switch in scene occurs. If the same virtual camera rotates and an angle at which the virtual camera rotates is very small, it may be understood as that a change in scene does not occur. If the same virtual camera rotates and the angle at which the virtual camera rotates exceeds a threshold, it may be understood as that a change in scene occurs. The scene identifier may be information that can indicate that a switch in scene occurs. The scene identifier may be information transmitted by an upper layer, for example, in a game scene, a character opens a door, or a character changes direction while moving. If the M matrix, the V matrix, or the P matrix is changed, it may also indicate that a change in scene occurs. Certainly, the scene indication information is not limited to the several types of information listed herein, and all other information that can indicate that the change in scene occurs falls within the scope of the scene indication information in this application.

If the any one data frame is rendered at the first resolution, after the first image frame obtained through rendering is buffered in the first buffer, the rendering process ends.

If the any one data frame is rendered at the second resolution, after the second image frame obtained through rendering is buffered in the second buffer, an image quality compensation module (image quality compensation module, IQCM) needs to compensate for rendering data of the second image frame in the second buffer based on a reference frame in the first buffer.

In this embodiment of this application, if the reuse management module determines that the change in scene occurs, the reference frame in the first buffer is updated.

The IQCM compensates for rendering data to obtain a compensated image, and then the rendering process ends.

In this embodiment of this application, the first image frame obtained through rendering may be directly output to a display device for display, and the second image frame obtained through rendering needs to be compensated for before being output to the display device for display. In the rendering solution provided in this embodiment of this application, whether a change in application scene occurs is determined based on scene indication information. Only when the change in application scene occurs, a $1^{st}$ data frame of a scene is rendered at a high resolution, and other data frames of the application scene are all rendered at a low resolution. Then, rendering data of a second image frame obtained through rendering at the low resolution is compensated for by using a first image frame obtained through rendering at the high resolution. In this way, high-frequency information of the scene can be retained, and therefore image quality can be improved. In addition, rendering loads can be reduced.

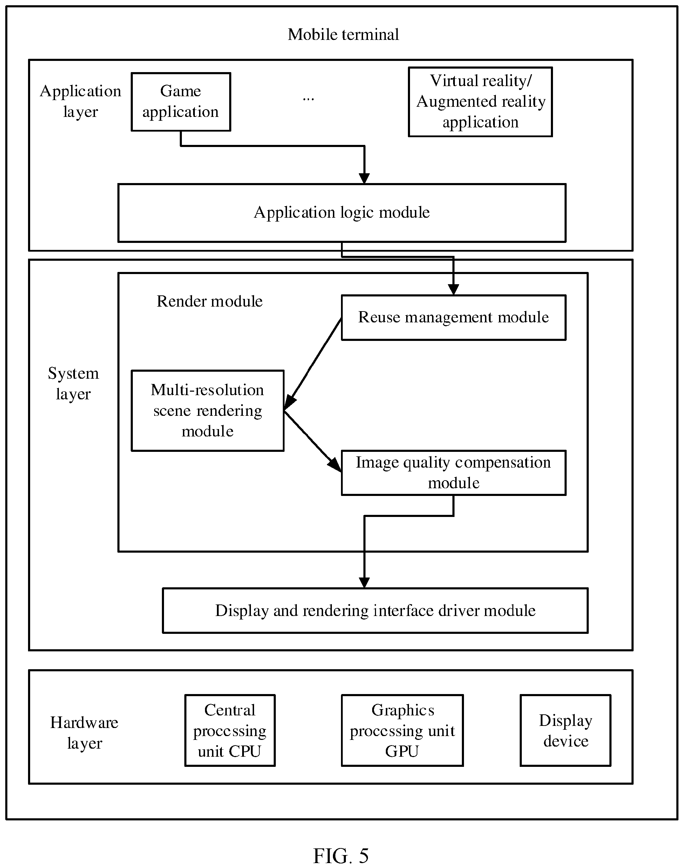

It can be learned from the foregoing description that, in this embodiment of this application, rendering logic of a system layer of the electronic device is modified. If the electronic device is, for example, a mobile terminal, an architecture of the mobile terminal may be understood with reference to FIG. 5.

As shown in FIG. 5, the mobile terminal includes an application layer, a system layer, and a hardware layer. The application layer may include various types of applications, such as a game application and a VR/AR application. The application layer may further include an application logic module. The system layer may be program code that is included in a rendering engine or rendering-related software and that is deployed on the mobile terminal. The program code in this application exists in an application or system software of the mobile terminal. At runtime, the program code in this application is run in a CPU memory and a GPU memory at the hardware layer. Specifically, as shown in FIG. 5, the system layer may include a render module and a display and rendering interface driver module. The render module may include a multi-resolution scene rendering module, a reuse management module, and an image quality compensation module. The hardware layer may include a CPU, a GPU, and a display device. It should be noted that in this embodiment of this application, the render module may alternatively be configured at the application layer.

The application at the application layer may invoke the render module at the system layer through the application logic module to render, for example, a game scene of a game application in progress. The multi-resolution scene rendering module in the render module may render a data frame at a first resolution or a second resolution, and then store an image frame obtained through rendering in a first buffer or a second buffer. For details, refer to the foregoing description of the rendering process of the any one data frame in the render module in FIG. 4 for understanding. Functions of the reuse management module and the image quality compensation module may also be understood with reference to corresponding descriptions in FIG. 4. The display and rendering interface driver module may establish a relationship between the render module and the hardware layer, for example, the GPU. A rendering process and a display process of a rendering result are implemented through the GPU.

The CPU and the GPU at the hardware layer provide hardware support for a rendering process of the render module at the system layer, and the display device may display content of the application, for example, a game screen of a game in progress.

Certainly, the application layer, the system layer, and the hardware layer are not limited to the content shown in FIG. 5. This is not limited in this application.

In embodiments of this application, there may be a plurality of solutions for compensating for the any one second image frame based on the reference frame. The following uses two compensation solutions as an example for description.

1. Compensation solution using reprojection in combination with a similarity

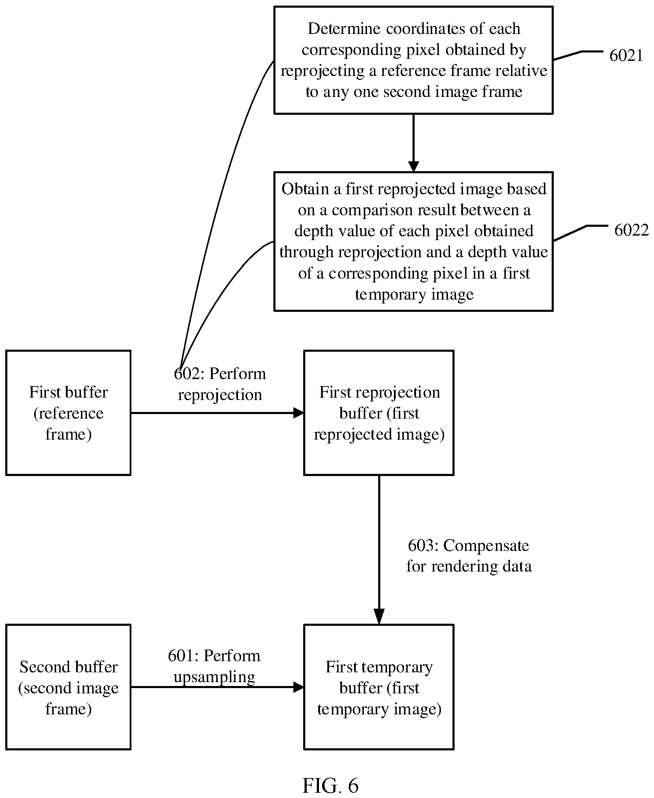

As shown in FIG. 6, a compensation process includes the following steps.

601: Upsample the any one second image frame in the second buffer to obtain an upsampled first temporary image.

In embodiments of this application, upsampling is scaling up an image. The first temporary image may be buffered in a first temporary buffer, and the first temporary buffer may be represented as a buffer $\alpha$.

602: Reproject the reference frame in the first buffer relative to the any one second image frame to obtain a first reprojected image.

The first reprojected image may be buffered in a first reprojection buffer, and the first reprojection buffer may be represented as a buffer $\beta$.

Step 602 may specifically include the following steps.

6021: Determine coordinates of each corresponding pixel obtained by reprojecting the reference frame relative to the any one second image frame.

The process of determining the coordinates of the pixel may be understood with reference to the following expression:

$$\beta_{(x1,y1,z1)} = M_2 * M_1^{-1} * c_{(x0,y0,z0)}$$

$c_{(x0,y0,z0)}$ represents coordinates of a pixel in the reference frame. $\beta_{(x1,y1,z1)}$ represents coordinates of a corresponding pixel in the buffer $\beta$ that are obtained through calculation according to the foregoing expression. $M_1^{-1}$ represents an inverse of a first product (VP). The first product is a product of a view matrix and a projection matrix of the reference frame. $M_2$ represents a second product. The second product is a product of a view matrix and a projection matrix of the any one second image frame.

6022: Obtain the first reprojected image based on a comparison result between a depth value of each pixel obtained through reprojection and a depth value of a corresponding pixel in the first temporary image.

Step 6022 may be specifically: obtaining an absolute value of a difference between a second depth value of each pixel in the first temporary image and a depth value of a corresponding pixel obtained through reprojection; and if the absolute value of the difference is less than a second threshold, identifying the pixel obtained through reprojection as a valid pixel, to obtain the first reprojected image.

This process may be understood with reference to depth values, namely, z values, in the buffer $\alpha$ and the buffer $\beta$. If an absolute value of a difference between $z_\alpha$ and $z_\beta$ is less than the second threshold, a pixel corresponding to $\beta_{(x1,y1)}$ is identified as a valid pixel.

If the absolute value of the difference is greater than the second threshold, the pixel is determined as an invalid pixel. The invalid pixel does not need compensation.

In a scene of an application, a reference frame is obtained by rendering a 1st data frame of the scene, and other subsequent second image frames are all obtained by rendering second data frames generated after the 1st data frame. That is, data frames are generated at different times. A game scene is used as an example. In a reference frame, a game character stands at a position A. In a time period from generation of the reference frame to generation of a second image frame, the game character has run to a position B, and rendering data of a pixel of the position A has been changed greatly. In this case, it is useless to compensate, based on the reference frame, for rendering data of a pixel that is related to the position A and that is in the second image frame. Therefore, such a pixel that does not need compensation may be defined as an invalid pixel.

Conversely, a valid pixel is a pixel, at a corresponding position, whose rendering data in all aspects is not changed greatly in the time period from generation of the reference frame to generation of the second image frame.

A depth value is a type of rendering data. When rendering data is changed greatly, a depth value in the rendering data is also changed greatly. When the rendering data is changed slightly, the depth value is also changed slightly. Therefore, a valid pixel may be determined by comparing depth values.

In this embodiment of this application, whether the corresponding pixel needs compensation is determined by comparing the depth values in the buffer $\alpha$ and the buffer $\beta$, that is, by comparing the absolute value of the difference between $z_\alpha$ and $z_\beta$ with the second threshold. If the corresponding pixel needs compensation, the pixel is identified with an identifier of the valid pixel. In this way, targeted compensation can be performed in a subsequent compensation step.

603: Compensate, by using rendering data of a pixel in the first reprojected image, for rendering data of a pixel at a corresponding position in the first temporary image.

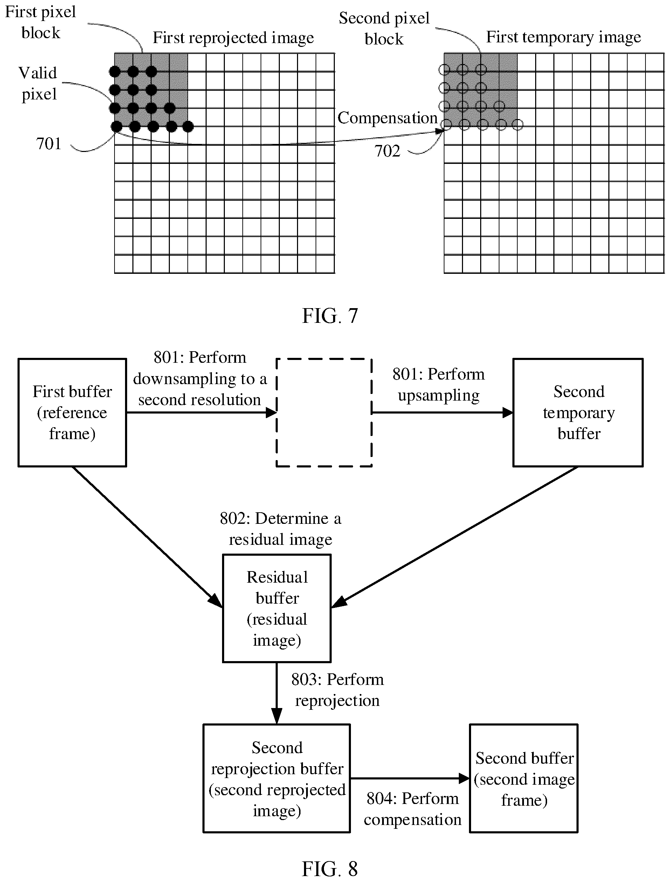

This process may be understood as compensating for the pixel in the first temporary image by using the rendering data of the pixel in the first reprojected image. The compensation process may be understood with reference to FIG. 7.

As shown in FIG. 7, before compensation, the first reprojected image and the first temporary image are divided into blocks. A pixel block of N*M pixels in the first reproj ected image is referred to as a first pixel block, and a pixel block of N*M pixels in the first temporary image is referred to as a second pixel block. A position of the first pixel block in the first reprojected image corresponds to a position of the second pixel block in the first temporary image, and at least one of N and M is an integer greater than 1. In this embodiment of this application, an example in which both N and M are equal to 4 is used for description.

Then, a similarity between the first pixel block and the second pixel block is determined. There may be a plurality of algorithms for determining the similarity, for example, an SSIM algorithm.

If the similarity is greater than a first threshold, rendering data of a pixel that is in the second pixel block and whose position corresponds to a position of a valid pixel is replaced with rendering data of the valid pixel in the first pixel block. In embodiments of this application, the first threshold and the second threshold may be the same or different. The replacement rendering data is mainly color data, and certainly, may also include depth data.

In FIG. 7, valid pixels are represented by black-filled circles, and an image of the pixel at the corresponding position in the second pixel block may be compensated for by using the rendering data of the valid pixel in the first pixel block. For example, a pixel 702 is compensated for by using rendering data of a pixel 701.

In this embodiment of this application, before compensation, the first reproj ected image and the first temporary image are divided into blocks, and then similarity comparison is performed to determine whether the second pixel block needs compensation. It should be noted that, image structures and more macro information on the images can be retained through division into blocks. This helps reuse the reference frame as much as possible, to improve image quality of frames obtained through rendering at the low resolution. In addition, whether the second pixel block needs compensation is determined based on a similarity comparison result, so that compensation can be avoided for a pixel block that does not need compensation. In this way, compensation efficiency is improved, thereby improving rendering efficiency. In addition, depth data is fully considered during compensation. Therefore, the rendering solution of this application is applicable to various frame rates.

2. Residual compensation solution

As shown in FIG. 8, a compensation process includes the following steps.

801: Downsample the reference frame in the first buffer to the second resolution and then perform upsampling, to obtain a second temporary image.

In this process, the reference frame in the first buffer may be downsampled, a downsampled image may be buffered in a buffer (buffer) A, and the image in the buffer A is upsampled to obtain the second temporary image. The second temporary image may be buffered in a second temporary buffer, and the second temporary buffer may be represented as a buffer $A'$.

802: Determine a residual image of the reference frame based on the reference frame in the first buffer and the second temporary image.

A residual may be determined according to the following expression:

$$\beta_{(x,y)} = clamp(2 * C_{(x,y)} - A'_{(x,y)})$$

$C_{(x,y)}$ represents color data of a pixel in the reference frame. $A'_{(x,y)}$ represents color data of a corresponding pixel in the second temporary image. $\beta_{(x,y)}$ represents a residual between the pixel in the reference frame and the corresponding pixel in the second temporary image.

803: Determine a second reprojected image of the residual image.

Step 803 may include: determining, based on coordinates of each pixel in the residual image, a first product, and a second product, coordinates of each corresponding pixel obtained by reprojecting the residual image to a time point at which the any one second image frame is generated, to obtain the second reprojected image, where the first product is a product of a view matrix and a projection matrix of the reference frame, and the second product is a product of a view matrix and a projection matrix of the any one second image frame.

This process may be determined according to the following expression:

$$\gamma_{(x1,y1,z1)} = M_2 * M_1^{-1} * \beta_{(x0,y0,z0)}$$

$M_1^{-1}$ represents an inverse of the first product (VP). The first product is the product of the view matrix and the projection matrix of the reference frame. $M_2$ represents the second product. The second product is the product of the view matrix and the projection matrix of the any one second image frame. $\beta_{(x0,y0,z0)}$ represents coordinates of a pixel in the residual image. $\gamma_{(x1,y1,z1)}$ represents coordinates of a corresponding pixel in the residual image.

After corresponding reprojected coordinates are obtained for the coordinates of each pixel in the residual image, the second reprojected image is obtained.

804: Compensate for rendering data of the any one second image frame in the second buffer based on the second reprojected image.

Step 804 may be understood with reference to the following expression.

$$a'_t(x, y) = a(x, y) + w(x, y) * \gamma(x, y)$$

$a(x,y)$ represents color data of a pixel in the second buffer. $\gamma(x,y)$ represents color data of each pixel in the residual image.

$$w(x, y, z) = \exp\left(-s * \frac{U*D*C - U*a_{(x,y,z)}}{U*D*C + U*a_{(x,y,z)}}\right),$$

where $s$ represents a controllable parameter, U represents upsampling, D represents downsampling, and C represents the reference frame. $a'_t(x, y)$ represents color data of a pixel in a compensated image frame.

After residual compensation is performed on each pixel in the second buffer according to the foregoing process, the compensated image frame is obtained. The compensated image frame may be output to a display device for display.

The image rendering method provided in embodiments of this application may be understood with reference to the following process when applied to a rendering process of a game.

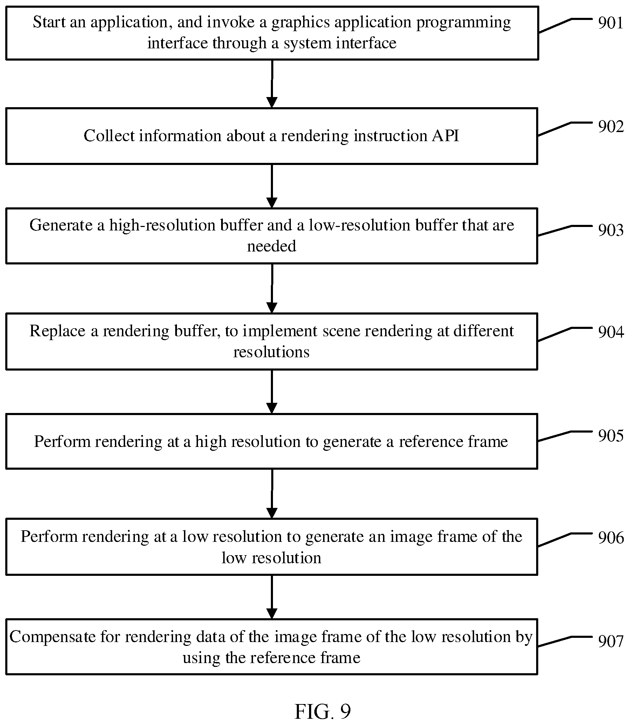

As shown in FIG. 9, the process includes the following steps.

901: Start an application, and invoke a graphics application programming interface (application programming interface, API) through a system interface.

In step 901, a layer function may be used to create a Hook module in an application directory, and when it is determined that the started application is a game, a required graphics API instruction is intercepted.

Required APIs may include graphics APIs related to scene rendering, such as glbindFrameBuffer, glDrawElements, glBindTexture, and glViewport.

902: Collect information about a rendering instruction API.

The information about the rendering instruction API includes, but is not limited to, camera information and scene rendering information.

903: Generate a high-resolution buffer and a low-resolution buffer that are needed.

In this embodiment of this application, a corresponding graphics API is obtained, and a parameter of the API is obtained via Hook, to obtain camera information and resolution information for scene rendering. For example, a length and a width of an original frame buffer of the application may be obtained by using a parameter of glViewPort. Then, a buffer corresponding to a high resolution (a first buffer) and a buffer corresponding to a low resolution (a second buffer) are allocated, where the second buffer may be set to half a size of the first buffer. In addition, a frame buffer for storing a frame obtained through image quality compensation is generated. A resolution corresponding to the frame buffer is equivalent to the high resolution.

904: Replace a rendering buffer, to implement scene rendering at different resolutions.

In this embodiment of this application, after the first buffer and the second buffer are allocated, rendering of a frame of a game scene is broken down into a plurality of passes for execution. A generally-applied procedure is a skybox pass, a shadow pass, a main scene pass, a bloom effect pass, and a UI pass. To achieve better effect, a frame buffer for a main scene may be replaced with the first buffer and the second buffer (in other words, a rendering instruction that originally needs to be scheduled to the frame buffer for the main scene is intercepted and scheduled to the first buffer or the second buffer). During rendering of each pass (PASS), whether the pass is a main scene pass is first determined. If the pass is not the main scene pass, the corresponding pass is directly rendered. If the pass is the main scene pass, a buffer is replaced. To be specific, a buffer for main scene rendering of the game is replaced with the first buffer and the second buffer in this application. Then, main scene rendering is performed. After main scene rendering, during rendering of a post-processing scene pass, a part using a main scene texture needs to use a texture of a replacing frame buffer as a replacement.

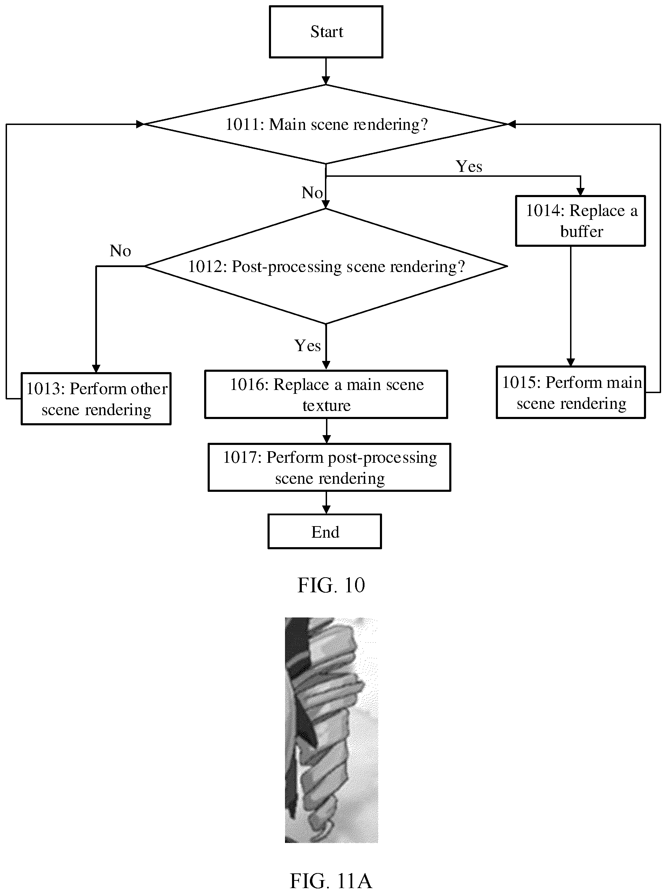

This process may be understood with reference to FIG. 10. As shown in FIG. 10, the process may include the following steps:

1011: Determine whether a pass is for main scene rendering, and perform step 1012 if the pass is not for main scene rendering, or perform step 1014 if the pass is for main scene rendering.

1012: Determine whether the pass is for post-processing scene rendering, and perform step 1013 if the pass is not for post-processing scene rendering, or perform step 1016 if the pass is for post-processing scene rendering.

1013: Perform other scene rendering.

1014: Replace a buffer, and perform 1015.

1015: Perform main scene rendering.

1016: Replace a main scene texture.

1017: Perform post-processing scene rendering.

A round of rendering process in FIG. 10 is generally as follows: Whether a pass is for main scene rendering is first determined. If the pass is not for main scene rendering, whether the pass is for post-processing scene rendering is determined. If the pass is not for post-processing scene rendering, whether the pass is for other scene rendering is determined. If the pass is not for other scene rendering, return to 1011, and whether a pass is for main scene rendering is determined. If the pass is for main scene rendering, a buffer is replaced. To be specific, an inherent buffer for main scene rendering of a game is replaced with a high-resolution frame buffer and a low-resolution frame buffer in this application. Then, main scene rendering is performed. After a main scene is rendered, return to step 1011 to perform determining again. In this case, the process enters a "no" branch: Step 1012 is performed, that is, whether a pass is for post-processing scene rendering is determined. If the pass is for post-processing scene rendering, step 1016 is performed, that is, a main scene texture is replaced with an image frame in a buffer in step 1014 in this application. Then, step 1017 is performed.

905: Perform rendering at the high resolution to generate a reference frame.

906: Perform rendering at the low resolution to generate an image frame of the low resolution.

907: Compensate for rendering data of the image frame of the low resolution by using the reference frame.

A rendering process of a rendering instruction and an image quality compensation process may be understood with reference to the foregoing description, and details are not described herein again.

In embodiments of this application, compensation for rendering data may also be referred to as image quality compensation.

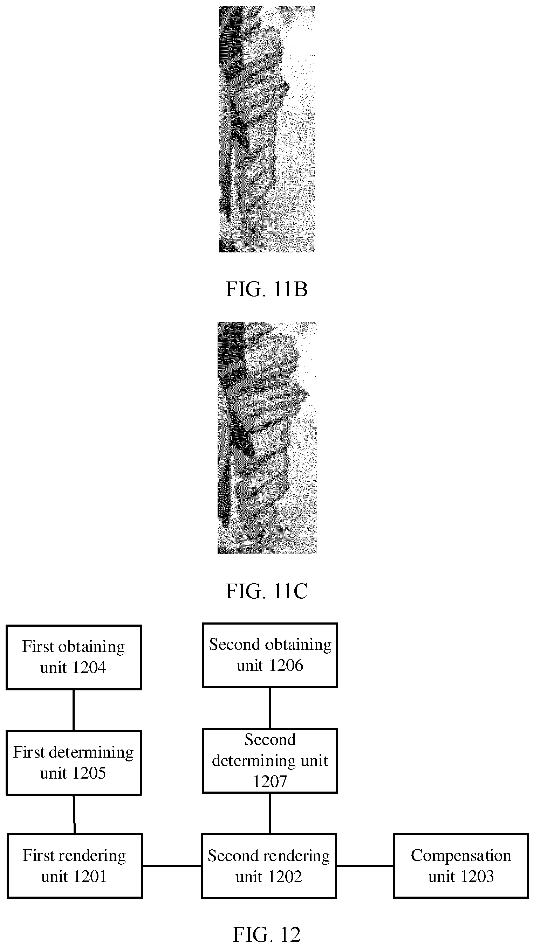

Quality of an image generated in a rendering process of a game according to the solutions provided in embodiments of this application may be understood with reference to FIG. 11A, FIG. 11B, and FIG. 11C.

FIG. 11A shows an image generated through rendering at a high resolution. FIG. 11B shows an image generated through rendering at a low resolution. FIG. 11C shows an image obtained by performing image quality compensation on the low-resolution image by using the high-resolution image as a reference.

It can be learned from comparison between FIG. 11B and FIG. 11C that, the image rendering method provided in embodiments of this application is used, so that rendering loads are reduced, and image quality is greatly improved.

The foregoing describes in detail a procedure of the image rendering method provided in this application. The following describes an apparatus for performing the rendering method provided in this application.

This application provides an electronic device. The electronic device may include a central processing unit (central processing unit, CPU) and a graphics processing unit (graphics processing unit, GPU).

The GPU or the CPU is configured to: render a first data frame at a first resolution to obtain a first image frame, where the first data frame is a $1^{st}$ data frame of an application scene of an application that is running on the electronic device; render a plurality of second data frames at a second resolution to obtain a plurality of second image frames, where the second resolution is less than the first resolution, the plurality of second data frames are data frames of the application scene that follow the first data frame in time sequence, and the plurality of second data frames are in a one-to-one correspondence with the plurality of second image frames; and compensate for rendering data of each of the plurality of second image frames by using the first image frame as a reference frame.

In a possible implementation, the electronic device includes a first buffer and a second buffer, a size of the first buffer corresponds to the first resolution, and a size of the second buffer corresponds to the second resolution; the first buffer is configured to buffer the reference frame, and the second buffer is configured to buffer any one of the plurality of second image frames; and the GPU or the CPU is specifically configured to compensate for rendering data of the any one second image frame in the second buffer based on rendering data of the reference frame in the first buffer.

In a possible embodiment, the GPU or the CPU is further configured to: obtain scene indication information corresponding to the first data frame, where the scene indication information is used to determine whether a change in application scene occurs; and if it is determined, based on the scene indication information, that the change in application scene occurs, determine to render the first data frame at the first resolution.

In a possible embodiment, the GPU or the CPU is further configured to: for the any one second data frame, obtain scene indication information corresponding to the any one second data frame, where the scene indication information is used to determine whether a change in application scene occurs; and if it is determined, based on the scene indication information, that the change in application scene does not occur, determine to render the any one second data frame at the second resolution.

In a possible embodiment, the GPU or the CPU is specifically configured to: upsample the any one second image frame in the second buffer to obtain an upsampled first temporary image; reproject the reference frame in the first buffer relative to the any one second image frame to obtain a first reprojected image; and compensate, by using rendering data of a pixel in the first reprojected image, for rendering data of a pixel at a corresponding position in the first temporary image.

In a possible embodiment, the GPU or the CPU is specifically configured to: determine a similarity between a first pixel block and a second pixel block, where the first pixel block is a pixel block of N*M pixels in the first reprojected image, the second pixel block is a pixel block of N*M pixels in the first temporary image, a position of the first pixel block in the first reprojected image corresponds to a position of the second pixel block in the first temporary image, and at least one of N and M is an integer greater than 1; and if the similarity is greater than a first threshold, replace, with rendering data of a valid pixel in the first pixel block, rendering data of a pixel that is in the second pixel block and whose position corresponds to a position of the valid pixel, where the valid pixel is a pixel for which an absolute value of a difference between a first depth value and a second depth value is less than the first threshold, the first depth value is a depth value of a pixel in the first reprojected image, and the second depth value is a depth value of a pixel in the first temporary image.

In a possible embodiment, the GPU or the CPU is specifically configured to: determine, based on coordinates of each pixel in the reference frame, a first product, and a second product, coordinates of each corresponding pixel obtained by reprojecting the reference frame relative to the any one second image frame, where the first product is a product of a view matrix and a projection matrix of the reference frame, and the second product is a product of a view matrix and a projection matrix of the any one second image frame; and obtain the first reprojected image based on a comparison result between a depth value of each pixel obtained through reprojection and a depth value of a corresponding pixel in the first temporary image.

In a possible embodiment, the GPU or the CPU is specifically configured to: obtain an absolute value of a difference between a second depth value of each pixel in the first temporary image and a depth value of a corresponding pixel obtained through reprojection; and if the absolute value of the difference is less than a second threshold, identify the pixel obtained through reprojection as a valid pixel, to obtain the first reprojected image.

In a possible embodiment, the GPU or the CPU is specifically configured to: determine a residual image of the reference frame in the first buffer; determine a second reprojected image of the residual image; and compensate for rendering data of the any one second image frame in the second buffer based on the second reprojected image.

In a possible embodiment, the GPU or the CPU is specifically configured to: downsample the reference frame in the first buffer to the second resolution and then perform upsampling, to obtain a second temporary image; and determine the residual image of the reference frame based on the reference frame in the first buffer and the second temporary image.

In a possible embodiment, the GPU or the CPU is specifically configured to determine, based on coordinates of each pixel in the residual image, a first product, and a second product, coordinates of each corresponding pixel obtained by reprojecting the residual image to a time point at which the any one second image frame is generated, to obtain the second reprojected image, where the first product is a product of a view matrix and a projection matrix of the reference frame, and the second product is a product of a view matrix and a projection matrix of the any one second image frame.

In a possible embodiment, the GPU or the CPU is further configured to: intercept the first data frame and the second data frame, schedule the first data frame to the first buffer, and schedule the second data frame to the second buffer.

FIG. 12 is a diagram of a structure of an image rendering apparatus according to this application. The image rendering apparatus may include a first rendering unit 1201, a second rendering unit 1202, and a compensation unit 1203.

The first rendering unit 1201 is configured to render a first data frame at a first resolution to obtain a first image frame, where the first data frame is a 1st data frame of a first scene of an application that is running on an electronic device. The first rendering unit 1201 is configured to perform step 301 in the foregoing method embodiment.

The second rendering unit 1202 is configured to render a plurality of second data frames at a second resolution to obtain a plurality of second image frames, where the second resolution is less than the first resolution, the plurality of second data frames are data frames of the first scene that follow the first data frame in time sequence, and the plurality of second data frames are in a one-to-one correspondence with the plurality of second image frames. The second rendering unit 1202 is configured to perform step 302 in the foregoing method embodiment.

The compensation unit 1203 is configured to compensate for rendering data of each of the plurality of second image frames obtained through rendering by the second rendering unit 1202, by using the first image frame obtained through rendering by the first rendering unit 1201 as a reference frame. The image compensation unit 1203 is configured to perform step 303 in the foregoing method embodiment.

In a possible implementation, the electronic device includes a first buffer and a second buffer, a size of the first buffer corresponds to the first resolution, and a size of the second buffer corresponds to the second resolution; and the first buffer is configured to buffer the reference frame, and the second buffer is configured to buffer any one of the plurality of second image frames.

The compensation unit 1203 is specifically configured to compensate for rendering data of the any one second image frame in the second buffer based on rendering data of the reference frame in the first buffer.

In a possible embodiment, the apparatus further includes:

a first obtaining unit 1204, configured to obtain scene indication information corresponding to the first data frame, where the scene indication information is used to determine whether a change in application scene occurs; and

a first determining unit 1205, configured to: if it is determined, based on the scene indication information, that the change in application scene occurs, determine to render the first data frame at the first resolution.

In a possible embodiment, the apparatus further includes:

a second obtaining unit 1206, configured to: for the any one second data frame, obtain scene indication information corresponding to the any one second data frame, where the scene indication information is used to determine whether a change in application scene occurs; and

a second determining unit 1207, configured to: if it is determined, based on the scene indication information, that the change in application scene does not occur, determine to render the any one second data frame at the second resolution.

In a possible embodiment, the compensation unit 1203 is specifically configured to: upsample the any one second image frame in the second buffer to obtain an upsampled first temporary image; reproject the reference frame in the first buffer relative to the any one second image frame to obtain a first reprojected image; and compensate, by using rendering data of a pixel in the first reprojected image, for rendering data of a pixel at a corresponding position in the first temporary image.

In a possible embodiment, the compensation unit 1203 is specifically configured to: determine a similarity between a first pixel block and a second pixel block, where the first pixel block is a pixel block of N*M pixels in the first reprojected image, the second pixel block is a pixel block of N*M pixels in the first temporary image, a position of the first pixel block in the first reprojected image corresponds to a position of the second pixel block in the first temporary image, and at least one of N and M is an integer greater than 1; and if the similarity is greater than a first threshold, replace, with rendering data of a valid pixel in the first pixel block, rendering data of a pixel that is in the second pixel block and whose position corresponds to a position of the valid pixel, where the valid pixel is a pixel for which an absolute value of a difference between a first depth value and a second depth value is less than the first threshold, the first depth value is a depth value of a pixel in the first reprojected image, and the second depth value is a depth value of a pixel in the first temporary image.

In a possible embodiment, the compensation unit 1203 is specifically configured to: determine, based on coordinates of each pixel in the reference frame, a first product, and a second product, coordinates of each corresponding pixel obtained by reprojecting the reference frame relative to the any one second image frame, where the first product is a product of a view matrix and a projection matrix of the reference frame, and the second product is a product of a view matrix and a projection matrix of the any one second image frame; and obtain the first reprojected image based on a comparison result between a depth value of each pixel obtained through reprojection and a depth value of a corresponding pixel in the first temporary image.

In a possible embodiment, the compensation unit 1203 is specifically configured to: obtain an absolute value of a difference between a second depth value of each pixel in the first temporary image and a depth value of a corresponding pixel obtained through reprojection; and if the absolute value of the difference is less than a second threshold, identify the pixel obtained through reprojection as a valid pixel, to obtain the first reprojected image.

In a possible embodiment, the compensation unit 1203 is specifically configured to: determine a residual image of the reference frame in the first buffer; determine a second reprojected image of the residual image; and compensate for rendering data of the any one second image frame in the second buffer based on the second reprojected image.

In a possible embodiment, the compensation unit 1203 is specifically configured to: downsample the reference frame in the first buffer to the second resolution and then perform upsampling, to obtain a second temporary image; and determine the residual image of the reference frame based on the reference frame in the first buffer and the second temporary image.

In a possible embodiment, the compensation unit 1203 is specifically configured to determine, based on coordinates of each pixel in the residual image, a first product, and a second product, coordinates of each pixel obtained by reprojecting the residual image relative to the any one second image frame, to obtain the second reprojected image, where the first product is a product of a view matrix and a projection matrix of the reference frame, and the second product is a product of a view matrix and a projection matrix of the any one second image frame.

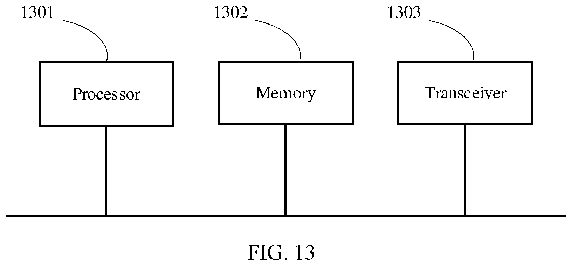

FIG. 13 is a diagram of a structure of another image rendering apparatus according to this application, as described below.

The image rendering apparatus may include a processor 1301 and a memory 1302. The processor 1301 and the memory 1302 are interconnected through a line. The memory 1302 stores program instructions and data.

The memory 1302 stores program instructions and data corresponding to the steps in FIG. 3 to FIG. 10. More specifically, the processor may be a processor for processing an image, for example, a GPU or a CPU for processing an image.

The processor 1301 is configured to perform the method steps performed by the image rendering apparatus shown in any one of the embodiments in FIG. 3 to FIG. 10.

Optionally, the image rendering apparatus may further include a transceiver 1303, configured to receive or send data.

An embodiment of this application further provides a computer-readable storage medium. The computer-readable storage medium stores a program. When the program is run on a computer, the computer is enabled to perform the steps in the method described in the embodiments shown in FIG. 3 to FIG. 10.

Optionally, the image rendering apparatus shown in FIG. 13 is a chip.

An embodiment of this application further provides an image rendering apparatus. The image rendering apparatus may also be referred to as a digital processing chip or a chip. The chip includes a processing unit and a communication interface. The processing unit obtains program instructions through the communication interface. The program instructions are executed by the processing unit. The processing unit is configured to perform the method steps shown in any one of the embodiments in FIG. 3 to FIG. 10.

An embodiment of this application further provides a digital processing chip. The digital processing chip integrates a circuit and one or more interfaces for implementing the processor 1301 or a function of the processor 1301. When the digital processing chip integrates a memory, the digital processing chip may implement the method steps in any one or more embodiments in the foregoing embodiments. When the digital processing chip does not integrate a memory, the digital processing chip may be connected to an external memory through a communication interface. The digital processing chip implements the method steps in the foregoing embodiments based on the program code stored in the external memory.

An embodiment of this application further provides a computer-readable storage medium. The computer-readable storage medium stores instructions. When the instructions are run on an electronic device, the electronic device is enabled to perform the steps in the method described in any one of the embodiments shown in FIG. 3 to FIG. 10.

An embodiment of this application further provides a computer program product. When the computer program product runs on a computer, the computer is enabled to perform the steps of the method described in any one of the embodiments shown in FIG. 3 to FIG. 10.

The image processing apparatus provided in this embodiment of this application may be a chip. The chip includes a processing unit and a communication unit. The processing unit may be, for example, a processor, and the communication unit may be, for example, an input/output interface, a pin, a circuit, or the like. The processing unit may execute computer-executable instructions stored in a storage unit, to enable the chip in a server to perform the rendering method described in the embodiments shown in FIG. 3 to FIG. 10. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

Specifically, the processing unit or the processor may include a central processing unit (central processing unit, CPU), a network processor (neural-network processing unit, NPU), a graphics processing unit (graphics processing unit, GPU), a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. A general-purpose processor may be a microprocessor, any regular processor, or the like.

In addition, it should be noted that the described apparatus embodiments are merely examples. The units described as separate parts may or may not be physically separate, and parts displayed as units may or may not be physical units, may be located in one position, or may be distributed on a plurality of network units. Some or all of the modules may be selected according to actual needs to achieve the objectives of the solutions of embodiments. In addition, in the accompanying drawings of the apparatus embodiments provided by this application, connection relationships between modules indicate that the modules are in communication connection with each other, which may be specifically implemented as one or more communication buses or signal cables.

Based on the description of the foregoing implementations, a person skilled in the art may clearly understand that this application may be implemented by software in addition to necessary general-purpose hardware, or by dedicated hardware, including an application-specific integrated circuit, a dedicated CPU, a dedicated memory, a dedicated component, and the like. Generally, any functions that can be performed by a computer program can be easily implemented by using corresponding hardware. In addition, a specific hardware structure used to achieve a same function may be in various forms, for example, in a form of analog circuit, digital circuit, or dedicated circuit. However, as for this application, a software program implementation is a better implementation in most cases. Based on such an understanding, the technical solutions of this application essentially or the part contributing to the conventional technology may be implemented in a form of software product. The computer software product is stored in a readable storage medium, for example, a floppy disk, a USB flash drive, a removable hard disk, a read-only memory (read-only memory, ROM), a random access memory (random access memory, RAM), a magnetic disk, or an optical disc of a computer, and includes several instructions for instructing a computer device (which may be a personal computer, a server, a network device, or the like) to perform the methods described in embodiments of this application.

All or some of the foregoing embodiments may be implemented by using software, hardware, firmware, or any combination thereof. When software is used to implement the embodiments, all or some of the embodiments may be implemented in a form of computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state disk, SSD)), or the like.

**Claims**

1. An image rendering method, comprising:

    rendering a first data frame at a first resolution to obtain a first image frame, wherein the first data frame is a 1st data frame of a first scene of an application that is running on an electronic device;
    rendering a plurality of second data frames at a second resolution to obtain a plurality of second image frames, wherein the second resolution is less than the first resolution, the plurality of second data frames are data frames of the first scene that follow the first data frame in time sequence, and the plurality of second data frames are in a one-to-one correspondence with the plurality of second image frames; and compensating for rendering data of each of the plurality of second image frames by using the first image frame as a reference frame.

2. The method according to claim 1, wherein the electronic device comprises a first buffer and a second buffer, a size of the first buffer corresponds to the first resolution, and a size of the second buffer corresponds to the second resolution;

    the first buffer is configured to buffer the reference frame, and the second buffer is configured to buffer any one of the plurality of second image frames; and
    the compensating for rendering data of each of the plurality of second image frames by using the first image frame as a reference frame comprises:
    compensating for rendering data of the any one second image frame in the second buffer based on rendering data of the reference frame in the first buffer.

3. The method according to claim 2, wherein before the rendering a first data frame at a first resolution to obtain a first image frame, the method further comprises:

    obtaining scene indication information corresponding to the first data frame, wherein the scene indication information is used to determine whether a change in application scene occurs; and
    if it is determined, based on the scene indication information, that the change in application scene occurs, determining to render the first data frame at the first resolution.

4. The method according to claim 2 or 3, wherein before the rendering a plurality of second data frames at a second resolution to obtain a plurality of second image frames, the method further comprises:

    for the any one second data frame, obtaining scene indication information corresponding to the any one second data frame, wherein the scene indication information is used to determine whether a change in application scene occurs; and
    if it is determined, based on the scene indication information, that the change in application scene does not occur, determining to render the any one second data frame at the second resolution.

5. The method according to any one of claims 2 to 4, wherein the compensating for rendering data of each of the plurality of second image frames by using the first image frame as a reference frame comprises:

upsampling the any one second image frame in the second buffer to obtain an upsampled first temporary image;
reprojecting the reference frame in the first buffer relative to the any one second image frame to obtain a first reprojected image; and
compensating, by using rendering data of a pixel in the first reprojected image, for rendering data of a pixel at a corresponding position in the first temporary image.

6. The method according to claim 5, wherein the compensating, by using rendering data of a pixel in the first reprojected image, for rendering data of a pixel at a corresponding position in the first temporary image comprises:

determining a similarity between a first pixel block and a second pixel block, wherein the first pixel block is a pixel block of N*M pixels in the first reprojected image, the second pixel block is a pixel block of N*M pixels in the first temporary image, a position of the first pixel block in the first reprojected image corresponds to a position of the second pixel block in the first temporary image, and at least one of N and M is an integer greater than 1; and
if the similarity is greater than a first threshold, replacing, with rendering data of a valid pixel in the first pixel block, rendering data of a pixel that is in the second pixel block and whose position corresponds to a position of the valid pixel, wherein the valid pixel is a pixel for which an absolute value of a difference between a first depth value and a second depth value is less than the first threshold, the first depth value is a depth value of a pixel in the first reprojected image, and the second depth value is a depth value of a pixel in the first temporary image.

7. The method according to claim 6, wherein the reprojecting the reference frame in the first buffer relative to the any one second image frame to obtain a first reprojected image comprises:

determining, based on coordinates of each pixel in the reference frame, a first product, and a second product, coordinates of each corresponding pixel obtained by reprojecting the reference frame relative to the any one second image frame, wherein the first product is a product of a view matrix and a projection matrix of the reference frame, and the second product is a product of a view matrix and a projection matrix of the any one second image frame; and
obtaining the first reprojected image based on a comparison result between a depth value of each pixel obtained through reprojection and a depth value of a corresponding pixel in the first temporary image.

8. The method according to claim 7, wherein the obtaining the first reprojected image based on a comparison result between a depth value of each pixel obtained through reprojection and a depth value of a corresponding pixel in the first temporary image comprises:

obtaining an absolute value of a difference between a second depth value of each pixel in the first temporary image and a depth value of a corresponding pixel obtained through reprojection; and
if the absolute value of the difference is less than the second threshold, identifying the pixel obtained through reprojection as a valid pixel, to obtain the first reprojected image.

9. The method according to any one of claims 2 to 4, wherein the compensating for rendering data of each of the plurality of second image frames by using the first image frame as a reference frame comprises:

determining a residual image of the reference frame in the first buffer;
determining a second reprojected image of the residual image; and
compensating for rendering data of the any one second image frame in the second buffer based on the second reprojected image.

10. The method according to claim 9, wherein the determining a residual image of the reference frame in the first buffer comprises:

downsampling the reference frame in the first buffer to the second resolution and then performing upsampling, to obtain a second temporary image; and
determining the residual image of the reference frame based on the reference frame in the first buffer and the second temporary image.

11. The method according to claim 9 or 10, wherein the determining a second reprojected image of the residual image comprises:
determining, based on coordinates of each pixel in the residual image, a first product, and a second product, coordinates of each pixel obtained by reprojecting the residual image relative to the any one second image frame, to obtain the second reprojected image, wherein the first product is a product of a view matrix and a projection matrix of the reference frame, and the second product is a product of a view matrix and a projection matrix of the any one second image frame.

12. An image rendering apparatus, comprising:

a first rendering unit, configured to render a first data frame at a first resolution to obtain a first image frame, wherein the first data frame is a 1$^{st}$ data frame of a first scene of an application that is running on an electronic device;
a second rendering unit, configured to render a plurality of second data frames at a second resolution to obtain a plurality of second image frames, wherein the second resolution is less than the first resolution, the plurality of second data frames are data frames of the first scene that follow the first data frame in time sequence, and the plurality of second data frames are in a one-to-one correspondence with the plurality of second image frames; and
a compensation unit, configured to compensate for rendering data of each of the plurality of second image frames obtained through rendering by the second rendering unit, by using the first image frame obtained through rendering by the first rendering unit as a reference frame.

13. An electronic device, comprising a transceiver, a processor, and a memory, wherein the transceiver and the processor are coupled to the memory, the memory is configured to store a program or instructions, and when the program or the instructions are executed by the processor, the electronic device is enabled to perform the method according to any one of claims 1 to 11.

14. A computer-readable storage medium, wherein the computer-readable storage medium stores instructions, and when the instructions are run on an electronic device, the electronic device is enabled to perform the method according to any one of claims 1 to 11.

15. A computer program product, wherein the computer program product comprises computer program code, and when the computer program code is run on a computer, the computer is enabled to perform the method according to any one of claims 1 to 11.

16. A chip system, wherein the chip system comprises one or more interface circuits and one or more processors; the interface circuit and the processor are interconnected through a line; the interface circuit is configured to: receive a signal from a memory of an electronic device, and send the signal to the processor, wherein the signal comprises computer instructions stored in the memory; when the processor executes the computer instructions, the electronic device performs the method according to any one of claims 1 to 11; and the processor is at least one of a central processing unit or a graphics processing unit.

Electronic device 1000

Central processing unit 1001

Application 1006

Operating system 1005

User-mode graphics driver

System graphics library interface

Kernel-mode graphics driver

Layer composition and display module

Memory 1004

Instruction stream

Rendering data

Display device 1003

Graphics processing unit 1002

Rendering pipeline

Buffer

FIG. 1

**Terminal 100**

Antenna 1          Antenna 2

| Mobile communication module 2G/3G/4G/5G [150] | Wireless communication module BT/WLAN/GNSS/NFC/IR/FM/UWB [160] |

Sensor module [180]

Pressure sensor [180A]

Speaker [170A]

Receiver [170B]

Audio module [170]

Gyroscope sensor [180B]

Microphone [170C]

Barometric pressure sensor [180C]

Headset jack [170D]

Magnetic sensor [180D]

Displays 1 to N [194]

Processor [110]

Acceleration sensor [180E]

Cameras 1 to N [193]

Distance sensor [180F]

Indicator [192]

Optical proximity sensor [180G]

Motor [191]

Application processor

Button [190]

Fingerprint sensor [180H]

Internal memory [121]

Image signal processor ISP

Temperature sensor [180J]

SIM card interfaces 1 to N [195]

Touch sensor [180K]

External memory interface [120]

Ambient light sensor [180L]

USB interface [130]

Power management module [141]

Charging management module [140]

Bone conduction sensor [180M]

Charging input

Battery [142]

Motion sensor [180N]

FIG. 2

Render a first data frame at a first resolution to obtain a first image frame, where the first data frame is a 1$^{st}$ data frame of a first scene of an application that is running on an electronic device — 301

Render a plurality of second data frames at a second resolution to obtain a plurality of second image frames, where the second resolution is less than the first resolution, the plurality of second data frames are data frames of the first scene that are after the first data frame in time sequence, and the plurality of second data frames are in a one-to-one correspondence with the plurality of second image frames — 302

Compensate for rendering data of each of the plurality of second image frames by using the first image frame as a reference frame — 303

FIG. 3

EP 4 538 958 A1

Render module

Start

Any one
data frame

Reuse
management
module

First buffer
(color buffer)

First buffer
(depth buffer)

Second buffer
(color buffer)

Second buffer
(depth buffer)

Image quality
compensation
module

After-compensation
buffer

End

FIG. 4

FIG. 5

FIG. 6

FIG. 7

FIG. 8

| | |
|---|---|
| Start an application, and invoke a graphics application programming interface through a system interface | 901 |

↓

| | |
|---|---|
| Collect information about a rendering instruction API | 902 |

↓

| | |
|---|---|
| Generate a high-resolution buffer and a low-resolution buffer that are needed | 903 |

↓

| | |
|---|---|
| Replace a rendering buffer, to implement scene rendering at different resolutions | 904 |

↓

| | |
|---|---|
| Perform rendering at a high resolution to generate a reference frame | 905 |

↓

| | |
|---|---|
| Perform rendering at a low resolution to generate an image frame of the low resolution | 906 |

↓

| | |
|---|---|
| Compensate for rendering data of the image frame of the low resolution by using the reference frame | 907 |

FIG. 9

Start

1011: Main scene rendering?

No

Yes

1014: Replace a buffer

No

1012: Post-processing scene rendering?

Yes

1013: Perform other scene rendering

1016: Replace a main scene texture

1015: Perform main scene rendering

1017: Perform post-processing scene rendering

End

FIG. 10

FIG. 11A

FIG. 11B

FIG. 11C

FIG. 12

1301      1302      1303

| Processor | Memory | Transceiver |

FIG. 13

<table>
<tr><td colspan="2" align="center">**INTERNATIONAL SEARCH REPORT**</td><td>International application No.<br>**PCT/CN2023/104575**</td></tr>
</table>

**A.    CLASSIFICATION OF SUBJECT MATTER**

G06T1/20(2006.01)i

According to International Patent Classification (IPC) or to both national classification and IPC

**B.    FIELDS SEARCHED**

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 渲染, 分辨率, 补偿, 重投影, 场景, render, resolution, compensation, reprojection, scene, scenario

**C.    DOCUMENTS CONSIDERED TO BE RELEVANT**

| Category* | Citation of document, with indication, where appropriate, of the relevant passages | Relevant to claim No. |
|---|---|---|
| X | CN 114359451 A (POINT BY POINT SEMICONDUCTOR (SHANGHAI) CO., LTD.) 15 April 2022 (2022-04-15)<br>  description, paragraphs [0017] and [0038]-[0046], and figure 3 | 1-16 |
| A | CN 113256755 A (ZWSOFT CO., LTD. (GUANGZHOU)) 13 August 2021 (2021-08-13)<br>  entire document | 1-16 |
| A | CN 114820327 A (HANGZHOU CITY UNIVERSITY) 29 July 2022 (2022-07-29)<br>  entire document | 1-16 |
| A | CN 113726950 A (HONOR TERMINAL CO., LTD.) 30 November 2021 (2021-11-30)<br>  entire document | 1-16 |
| A | CN 109391815 A (INTEL CORP.) 26 February 2019 (2019-02-26)<br>  entire document | 1-16 |
| A | US 2013050183 A1 (HIMAX TECHNOLOGIES LIMITED) 28 February 2013 (2013-02-28)<br>  entire document | 1-16 |

☐ Further documents are listed in the continuation of Box C.          ☑ See patent family annex.

| | | |
|---|---|---|
| \*    Special categories of cited documents:<br>"A"    document defining the general state of the art which is not considered to be of particular relevance<br>"D"    document cited by the applicant in the international application<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family | |

| Date of the actual completion of the international search | Date of mailing of the international search report |
|---|---|
| **11 October 2023** | **17 October 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/104575**

| Patent document cited in search report | | | Publication date (day/month/year) | Patent family member(s) | | | Publication date (day/month/year) |
|---|---|---|---|---|---|---|---|
| CN | 114359451 | A | 15 April 2022 | US | 2022101504 | A1 | 31 March 2022 |
| CN | 113256755 | A | 13 August 2021 | None | | | |
| CN | 114820327 | A | 29 July 2022 | None | | | |
| CN | 113726950 | A | 30 November 2021 | WO | 2022258024 | A1 | 15 December 2022 |
| | | | | EP | 4224831 | A1 | 09 August 2023 |
| CN | 109391815 | A | 26 February 2019 | US | 2019045213 | A1 | 07 February 2019 |
| | | | | EP | 3439306 | A1 | 06 February 2019 |
| | | | | KR | 20190015093 | A | 13 February 2019 |
| US | 2013050183 | A1 | 28 February 2013 | None | | | |

Form PCT/ISA/210 (patent family annex) (July 2022)

**REFERENCES CITED IN THE DESCRIPTION**

**Patent documents cited in the description**

*   CN 202211288925